# EUROPÄISCHE PATENTSCHRIFT

(11) **EP 4 613 674 B1**
(45) Veröffentlichungstag und Bekanntmachung des Hinweises auf die Patenterteilung: **02.12.2026**
(21) Anmeldenummer: 25161425.1
(22) Anmeldetag: 03.03.2025
(51) Int. Cl.: B65G 9/00, B65G 47/61

(54) **VORRICHTUNG UND VERFAHREN FÜR DAS BELADEN UND ENTLADEN VON TRANSPORTEINHEITEN EINES HÄNGEFÖRDERSYSTEMS**
DEVICE AND METHOD FOR LOADING AND UNLOADING TRANSPORT UNITS OF AN OVERHEAD CONVEYOR SYSTEM
DISPOSITIF ET PROCÉDÉ POUR CHARGER ET DÉCHARGER DES UNITÉS DE TRANSPORT D'UN SYSTÈME DE TRANSPORT SUSPENDU

(30) Priorität: 08.03.2024 CH 2832024
(43) Veröffentlichungstag der Anmeldung: 10.09.2025
(73) Patentinhaber: Ferag AG, 8340 Hinwil (CH)
(72) Erfinder: Fenile, Roberto, 8340 Hinwil (CH)
(74) Vertreter: IPrime Rentsch Kaelin AG

(56) Entgegenhaltungen:
- EP-A1- 3 453 649
- WO-A1-2018/142243
- CH-A1- 713 082
- CH-A1- 713 089
- DE-A1- 102012 018 925
- US-B2- 10 954 079

## Beschreibung

### Technisches Gebiet

Die vorliegende Erfindung bezieht sich auf das Gebiet der Transport- und Fördertechnik. Sie betrifft Vorrichtungen zum Beladen und Entleeren von hängend geförderten Transporttaschen sowie eine Hängeförderanlage, welches solche Vorrichtungen umfasst.

### Technologischer Hintergrund

In der modernen Logistik, insbesondere in der Intralogistik, spielen Hängefördersysteme eine zunehmend wichtige Rolle, um den Anforderungen des stetig wachsenden Online-Handels gerecht zu werden. Diese Systeme, die unter anderem für die Lagerung, Kommissionierung und den Transport von Wareneinheiten in automatisierten Warenlagern und Produktionsstätten verwendet werden, haben sich als besonders effizient erwiesen. Dadurch, dass Wareneinheiten direkt an Förderelementen aufgehängt oder in Transporteinheiten, wie beispielsweise Transporttaschen, eingebracht werden können, bieten Hängefördersysteme eine vielseitige Lösung für logistische Herausforderungen.

Für die modernen intralogistischen Anwendungen besonders relevant sind schwerkraftgeförderte, schienengeführte Hängefördersysteme, wie sie beispielsweise in US 2017/275826 A1, US 2018/215547 A1 und US 2017/282317 A1 beschrieben werden. Diese Dokumente unterstreichen die technische Entwicklung und die Vielfalt der Einsatzmöglichkeiten von Hängefördersystemen.

Um den steigenden Anforderungen zu begegnen, insbesondere im Hinblick auf schnelle und effiziente Verarbeitungsprozesse von Wareneinheiten, wird die Automatisierung innerhalb der Intralogistik zunehmend wichtiger. Teilautomatisierte und vollautomatisierte Systeme für das Einbringen von Wareneinheiten in Transporteinheiten beziehungsweise für das Entnehmen von Wareneinheiten aus Transporteinheiten sind für die Steigerung der Prozesseffizienz bedeutsam. Moderne Ansätze zur Automatisierung und Optimierung dieses Vorgangs sind in verschiedenen Patentdokumenten ausführlich beschrieben.

Was die Beladung angeht, so offenbart CH 719181 A1 ein Beladungsmanagement-System für Fördersysteme mit mehreren Förderern und Transferstationen zur effizienten Handhabung und Sortierung von Wareneinheiten. Darüber hinaus ist in CH 716519 A1 ein Transfergerät für Wareneinheiten in Hängefördersystemen beschrieben, welches die Beladung und Entladung durch richtungsangepasste Fördereinheiten ermöglicht. Schliesslich beschreibt WO 2020/232496 A1 ein Hängefördersystem, welches für den Transport von Wareneinheiten mittels flexibler Transporttaschen aus biegeschlaffem Material und einer spezifischen Beladestation konzipiert ist. Es zeichnet sich durch eine Messeinrichtung aus, die die Ausdehnung der Taschenkörper in der Transportstellung ermittelt.

CH 713089 A1 präsentiert ebenfalls ein Verfahren und eine Vorrichtung zum Öffnen einer Transporttasche eines Hängefördersystems durch Anlegen einer Schubkraft auf ein Schubelement, wodurch Vorderwand und Rückwand der Tasche für das Beladen oder Entladen bewegt werden. Eine Beladestation umfasst ein Hängefördersystem mit mindestens einer Transporttasche mit einer Aufhängeöse und einer an der Aufhängeöse schwenkbar hängend gelagerten Transporttasche. Das Hängefördersystem ist dazu ausgelegt, die mindestens eine Transporttasche entlang eines Förderwegs in einer Förderrichtung zu fördern. Die Transporttasche weist eine Rückwand auf, welche an der Aufhängeöse der Transporttasche schwenkbar hängend gelagert ist. Eine Vorderwand ist schwenkbeweglich mit der Rückwand verbunden und läuft in Förderrichtung der Rückwand voraus. Ein Schubelement der Transporttasche ist dazu ausgestaltet, bei Krafteinwirkung durch eine Schubeinrichtung der Beladestation bei der stillstehenden Transporttasche die Vorderwand von der Rückwand weg zu bewegen und so die Transporttasche zu öffnen. Gleichzeitig wird die Transporttasche in eine schräge Lage gekippt. Im geöffneten Zustand der Transporttasche liegt die Vorderwand an einem Rollenteppich der Beladestation an, so dass zugeförderte Waren und Stückgüter in die geöffnete Tasche gefüllt werden können. Die CH 713089 A1 offenbart eine Beladevorrichtung zum Beladen von Transporteinheiten in einer Hängefördervorrichtung, umfassend: eine Hängefördervorrichtung mit mindestens einer Transporteinheit mit einem Tragelement und einer am Tragelement schwenkbar hängend gelagerten Transporttasche, wobei die Hängefördervorrichtung dazu ausgelegt ist, die mindestens eine Transporteinheit entlang eines Förderpfades in einer Förderrichtung zu fördern, wobei die Transporttasche der mindestens einen Transporteinheit eine Rückwand aufweist, welche am Tragelement der Transporteinheit schwenkbar hängend gelagert ist, sowie eine mit der Rückwand beweglich verbundene Vorderwand, welche in der Förderrichtung der Rückwand vorausläuft; eine Schwenkvorrichtung, welche eingerichtet ist, mit der Vorderwand der Transporttasche einer entlang des Förderpfads der Hängefördervorrichtung geförderten Transporteinheit zu wechselwirken, um die Transporttasche während der Förderung entlang eines ersten Abschnitts des Förderpfads von einer senkrechten ersten Orientierung in eine gegenüber der Senkrechten geschwenkte zweite Orientierung zu schwenken; und eine Stützvorrichtung, welche eingerichtet ist, die Vorderwand der Transporttasche während der Förderung entlang eines zweiten Abschnitts des Förderpfades zu stützen.

Die CH 713089 A1 offenbart ebenfalls eine Entladevorrichtung zum Entladen von mit Stückgütern beladenen Transporteinheiten in einer Hängefördervorrichtung, umfassend: eine Hängefördervorrichtung mit mindestens einer Transporteinheit mit einem Tragelement und einer am Tragelement schwenkbar hängend gelagerten Transporttasche, wobei die Hängefördervorrichtung dazu ausgelegt ist, die mindestens eine Transporteinheit entlang eines Förderpfades in einer Förderrichtung zu fördern, wobei die Transporttasche der mindestens einen Transporteinheit eine Rückwand aufweist, welche am Tragelement der Transporteinheit schwenkbar hängend gelagert ist, sowie eine mit der Rückwand beweglich verbundene Vorderwand, welche in Förderrichtung der Rückwand vorausläuft; eine Schwenkvorrichtung, welche eingerichtet ist, mit der Vorderwand der Transporttasche einer entlang des Förderpfades der Hängefördervorrichtung geförderten Transporteinheit zu wechselwirken, um die Transporttasche während der Förderung entlang eines ersten Abschnitts des Förderpfades von einer senkrechten ersten Orientierung in eine gegenüber der Senkrechten geschwenkte zweite Orientierung zu schwenken.

Das Entladen von Stückgütern aus Hängefördersystemen ist ein kritischer Schritt in der Logistikkette, der die Effizienz, Schnelligkeit und Sicherheit der weiteren Warenverarbeitung und -distribution massgeblich beeinflusst. Ein optimiertes Entladen sorgt nicht nur für einen reibungslosen Übergang der Wareneinheiten zu den nächsten Verarbeitungsoder Lagerbereichen, sondern minimiert auch das Risiko von Beschädigungen und verbessert die Arbeitsbedingungen für das Personal. In einem schnelllebigen Marktumfeld, in dem Zeitersparnis und Kostenreduktion wichtige Wettbewerbsvorteile darstellen, sind Innovationen in der Entladetechnologie von zentraler Bedeutung.

EP 3712091 A1 zeigt beispielsweise ein Verfahren und eine Vorrichtung zum seitlichen Entladen von Transportgut aus einer seitlich offenen Transporttasche durch Anheben eines Teils der Auflagefläche, wodurch das Gut seitlich abgleitet.

WO 2018/142243 A1 offenbart eine Entladestation für eine Hängeförderanlage mit einer Förderschiene, einem Förderantrieb und mehreren mittels des Förderantriebs entlang der Förderschienen geförderten Hängeadaptern, an denen Förderbehälter in Form von Transporttaschen förderbar sind. Die Förderschiene weist einen von der Horizontalen abweichenden Schrägabschnitt auf, der in Förderrichtung nach unten geneigt ist. Die Entladestation weist eine Vorrichtung zum Entleeren dieser hängend geförderten Transporttaschen auf, mit einer Öffnungseinheit zum Öffnen dieser Fördereinheiten an einer Öffnungsposition, welche entlang des genannten Schrägabschnitts der Förderschiene angeordnet ist. Die Öffnungseinheit beinhaltet eine unterhalb der Förderschiene angeordnete Warenabgabefläche zum Abgeben von aus den Förderbehältern abgegebenen Waren, in Form eines umlaufendes Förderband für die Übernahme von Stückguteinheiten aus den Transporttaschen und einer an das Förderband anschliessenden gekrümmten Rutsche. Die Warenabgabefläche fällt an der Öffnungsposition gegenüber der Horizontalen in Förderrichtung nach unten ab und bildet so eine Gleitfläche, auf welcher die abgegebenen Waren nach unten rutschen können. Durch eine geeignete Anordnung des Förderbands und des Förderschiene wird der Abstand zwischen den beiden in Förderrichtung kontinuierlich kleiner, sodass die Transporttaschen an der Öffnungsposition in Förderrichtung so stark in Förderrichtung nach hinten verkippt sind, dass die Öffnung der Tasche nun nach unten zeigt. Die Transporttasche ist also an einer Unterseite geöffnet, und die im Förderbehälter enthaltenen Waren fallen oder gleiten schwerkraftgetrieben auf die Warenabgabefläche.

Schliesslich zielt DE 102022002687 A1 auf eine effiziente Auslagerung von Stückgütern aus einem Transporttaschenlager. Dieser umfasst verschiedene Pufferstufen, um die Stückgütern in einer vorgegebenen Reihenfolge bereitzustellen.

DE 102012018925 A1 betrifft eine Hängeförderanlage mit einer Beladestation und speziell gestalteten Transporttaschen, die sowohl für den Transport als auch für das Beladen und Entladen von Stückgütern optimiert sind und seitlich beladbar und entladbar sind. Die Anlage umfasst einen Hängeförderer zum Transport von Transporttaschen entlang einer Führungsschiene, wobei die Transporttaschen in Transportstellung vertikal hängen und für die Beladung horizontal ausgerichtet werden können. Jede Transporttasche ist mit einer Aufhängeeinrichtung zur schwenkbaren Verbindung mit der Führungsschiene ausgestattet und besitzt eine im Wesentlichen geschlossene Rückwand, einen Deckel, eine Vorderwand und einen Boden, die dauerhaft schwenkbeweglich miteinander verbunden sind und zwei seitliche Taschenöffnungen definieren. Die Rückwand der Transporttasche ist breiter als deren Vorderwand, so dass über die ganze Länge der Rückwand seitlich hervorstehende Flügelbereiche resultieren. Die Beladestation beinhaltet eine Auslenkeinrichtung, welche eine Transporttasche während des Transports von einer senkrechten Transportstellung in eine horizontalen Beladestellung dreht. Das Schwenken erfolgt durch das Anstossen der Flügelbereiche der Rückwand an der stromaufwärts gelegenen Kante der Auslenkeinrichtung. An einer Beladeposition wir die Transporttasche angehalten. An der Beladeposition befindet sich die Rückwand der Transporttasche in einer horizontalen Beladestellung, und die Flügelbereiche sind über ihre ganze Länge gestützt, während die über den Deckel und den Boden an der Rückwand aufgehängte Vorderwand ungestützt frei nach unten hängt. Ein Stückgut wird durch die seitliche Taschenöffnung in die Transporttasche eingeschoben und liegt dann auf der Vorderwand. Dieses System weist insbesondere im Hinblick auf die Beladestation mehrere Nachteile auf. Die Stützung der Transporttasche erfolgt ausschliesslich durch die Interaktion ihrer Flügelbereiche mit der Auslenkeinrichtung. Es ist keine externe Unterstützung der Vorderwand während des Beladevorgangs gegeben. Die resultierende mechanische Belastung reduziert die Nutzungsdauer einer Transporttasche, erfordert zusätzliche Verstärkungselemente der Transporttasche und beschränkt das maximal mögliche Gewicht eines transportierbaren Stückgutes. Die ausschliessliche Abhängigkeit von den Flügelbereichen zur Stabilisierung und Ausrichtung der Taschen begrenzt zudem die Flexibilität des Systems und erhöht das Risiko, dass Taschen unter der Last der Ladung kippen, knicken oder sich unerwünscht bewegen. Darüber hinaus ist es nicht optimal, dass die Tasche mittels einer Einrichtung, nämlich der Auslenkeinrichtung sowohl ausgerichtet als auch gestützt wird. Diese Konzentration auf eine einzige Komponente für zwei wesentliche Funktionen des Beladevorgangs birgt inhärente Risiken. Die präzise Ausrichtung und die gleichzeitige Stützung durch die Auslenkeinrichtung erfordern eine hochgradige Genauigkeit und Zuverlässigkeit des Systems. Jegliche Abweichung oder Fehlfunktion der Auslenkeinrichtung kann zu ungenauen Positionierungen der Tasche führen, was wiederum die Beladungseffizienz beeinträchtigt. Schliesslich ist ein weiterer bedeutender Nachteil die Notwendigkeit einer spezifischen Form der Rückwand der Tasche, die jeweils breiter als die Vorderwand und der Deckel sein muss, um Platz für die Flügelbereiche zu schaffen. Dieses Konstruktionserfordernis erlaubt keine einfache Nachrüstung bestehender Taschen, sondern erfordert vielmehr einen kompletten Umbau oder die Neugestaltung der Taschen, um sie während des Beladevorgangs durch die Flügelbereiche stützen zu können. Diese Notwendigkeit untergräbt erheblich die Flexibilität und Einsatzmöglichkeiten der Hängeförderanlage, insbesondere wenn es darum geht, sie in Förderanlagen mit bereits existierenden Taschen unterschiedlichen Designs zu integrieren.

WO 2017/088078 A1 beschreibt eine Transporttasche und zugehörige Vorrichtungen für den Transport und die Handhabung von Stückgütern, insbesondere in automatisierten Lager- und Fördersystemen. Die Transporttasche, konzipiert für den hängenden Transport mittels einer Hängefördereinrichtung, beinhaltet ein Aufnahmefach mit einer Taschenrückwand und einer Beutelwand, die gemeinsam eine Öffnung für das Transportgut formen. Ein wesentliches Merkmal ist das mindestens eine Steuerelement an der Beutelwand, das mit einer Steuerkulisse der Fördereinrichtung interagiert, um das Aufnahmefach zwischen einer geöffneten und einer kompakten Lage zu bewegen. Das Dokument umfasst auch eine Vorrichtung zum Beschicken der Transporttaschen mittels einer Zufördereinrichtung, die das Transportgut in eine Transferzone bringt, wo es in die Taschen transferiert wird. Die Taschen sind so gestaltet, dass sie in einer liegenden Formation durch die Transferzone bewegt werden können, wobei eine Schwerkraftunterstützung das Transportgut in die Taschen leitet.

US 2020/0189846 A1 offenbart eine Kommissionieranlage und ein Verfahren zum Kommissionieren von Artikeln, wobei Artikel aus einer Artikelsammlung entnommen, zu Artikelgruppen kombiniert und in Form dieser Gruppen für die weitere Verarbeitung ausgegeben werden. Die Kombination der Artikel zu Artikelgruppen erfolgt in an einem hängenden Förderer aufgehängten Beuteln oder Körben. Die Anlage umfasst an der Eingangsseite eine Artikelsammlung mit zum Kommissionieren bestimmten Artikeln und mindestens eine damit verbundene Befüllvorrichtung für die Beutel oder Körbe. An der Ausgangsseite befindet sich eine Entleerungsvorrichtung für mit den Artikelgruppen gefüllte Beutel oder Körbe. Zwischen der Befüll- und der Entleerungsvorrichtung ist ein hängender Förderer angeordnet, der die Befüllvorrichtung mit der Entleerungsvorrichtung verbindet.

DE 102016208866 A1 beschreibt eine Fördergutübergabestation für Hängefördereinrichtungen, die es ermöglicht, Förderguttransporttaschen an Führungsschienen zu öffnen und zu schliessen, um Fördergut aufzunehmen oder abzugeben. Die Station bietet einen Schnelldurchlaufbetriebsmodus, unterstützt durch eine Hub-/Kippvorrichtung, die die Taschen in eine Übergabeposition bringt. Zusätzlich umfasst die Fördergutübergabestation ein Antriebsmittel für die Taschenbewegung, einen Sicherungsmechanismus und ein Schaufelrad mit Hubschaufeln.

JP H07/304514 A beschreibt ein Hängefördersystem mit Transporttaschen für gefaltete Textilprodukte. Die Transporttaschen bestehen aus gegenüberliegenden Seitenwänden, die an ihren unteren Enden schwenkbeweglich miteinander verbunden sind, um ein gefaltetes Textilprodukte dazwischen klemmend zu halten. An jeder Seitenwand ist schwenkbeweglich ein Verbindungsglied angebracht, wobei die beiden Verbindungsglieder wiederum an einer horizontalen Drehachse schwenkbeweglich miteinander verbunden sind. An der gleichen Drehachse ist eine Aufhängung des Laufwagens befestigt. Zum Entleeren der Transporttaschen werden diese aus einer senkrechten Transportlage um mehr als 90° um die Drehachse geschwenkt, so dass durch das Eigengewicht der Transporttasche die beiden Seitenwände auseinander gedrückt werden und das klemmend gehaltene Transportgut freigeben. Das Transportgut rutscht anschliessend aus der Transporttasche über eine Rutsche auf einen Bandförderer.

DE 102004018569 A1 beschreibt eine Sammeleinrichtung und Fördervorrichtung für das sortierende Sammeln und Transportieren von Objekten, speziell Kleidungsstücken. Die Sammeleinrichtung besteht aus einer Sammeltasche mit einem Rahmengestell und einem daran hängenden Taschenbeutel. Das Rahmengestell integriert ein Mitnahmeelement, das eine schwenkbare Verbindung quer zur Förderrichtung ermöglicht, sodass der Taschenbeutel in horizontaler Position geöffnet und in vertikaler Position geschlossen ist. Die Fördervorrichtung befördert die Sammeltasche und ist mit einer Öffnungsvorrichtung kombiniert, die die Sammeltasche während des Transports in einen geöffneten Zustand überführt.

DE 102008026720 A1 offenbart eine Transporttasche und eine Förderanlage zur Automatisierung des Transport- und Entladevorgangs von Stückgütern. Die Transporttasche besteht aus einer formstabilen Tragewand mit einem oberen schwenkbaren Bügel und einer flexiblen Boden-Seiten-Wand. Die Tragewand ist mit Kupplungen ausgestattet, die im unteren Bereich zur Aufnahme von Gegenkupplungsmitteln der Boden-Seiten-Wand dienen, wodurch die Tasche unten geschlossen werden kann. Ein Mechanismus zum Öffnen der Kupplungen ermöglicht das automatische Entladen der Ware durch Öffnen nach unten. Die zugehörige Förderanlage besitzt Förderschienen mit Mitnehmern, Schliessstationen für das Schliessen der Tasche, Belade-Stationen zum Distanzieren der Boden-Seiten-Wand von der Tragewand für das Beladen und Entladestationen zum automatischen Öffnen der Kupplungen und Entladen der Ware.

DE 102014203298 A1 bezieht sich auf eine Hängefördereinrichtung zum Transport von Fördergut in Transporttaschen. Diese Einrichtung beinhaltet Transporttaschen mit zwei Taschenseitenwänden, die über eine Schwenkachse verbunden sind, um einen Fördergutaufnahmebereich zu öffnen oder zu schliessen. Eine Ladestation mit einer vertikal verstellbaren Ladeplattform ermöglicht das einfache Beladen und Entladen der Taschen. Die Anordnung bietet Flexibilität für unterschiedliche Transporttaschengrössen und verbessert die Handhabung durch automatische oder manuelle Steuerung. Zusätzlich können Transporttaschen durch eine vertikale und horizontale Verstellbarkeit der Ladeplattform optimiert positioniert werden.

DE 202017105508 U1 offenbart eine Transporttasche für automatische Förderanlagen, die eine Vorderwand, eine Rückwand und einen schwenkbaren Haltebügel umfasst. Die Wände sind oben am Haltebügel gelenkig befestigt. Am Boden der Vorderwand befindet sich mindestens ein Kupplungselement. Ein rinnenartiges oder wannenartiges Bodenelement mit zwei Seitenwänden ist integriert, wobei eine Seite an der Rückwand gelenkig befestigt ist und die andere Seite mindestens ein Gegenkupplungselement für das Kupplungselement aufweist.

EP 2130968 A1 umfasst eine Transporttasche und eine Förderanlage mit Vorrichtungen zum Befüllen und Entleeren der Transporttaschen. Die Transporttasche besitzt eine formstabile Tragewand und eine zweite, flexible Wand, welche auch den Boden der Tasche bildet. An der Tragewand ist am oberen Ende ein schwenkbarer Bügel befestigt ist, an dem die flexible zweite Wand schwenkbar befestigt ist. Tragewand und zweite Wand sind an ihrem unteren Ende über eine reversibel lösbare Kupplung verbunden. Die Tragewand läuft der zweiten Wand in Förderrichtung voraus. Die Transporttasche lässt sich automatisch entladen, indem an einer Entladestation die Kupplung über im oberen Bereich der Tragewand angebrachte Betätigungsmittel geöffnet wird. Die in der Transporttasche transportierten Güter fallen dann nach unten durch die entstandene untere Öffnung aus der Transporttasche heraus. Die geöffnete Kupplung der Transporttasche muss anschliessend an einer komplexen Schliessstation wieder geschlossen werden. Zum Befüllen der Transporttasche ist an einer Beladestation eine Kulissenführung vorgesehen, welche bei der Förderung der Transporttasche den Bügel über seitliche hervorstehende Führungs-Vorsprünge nach oben schwenkt, so dass der Abstand zwischen Tragewand und zweiter Wand grösser wird, und eine seitliche Taschenöffnung entsteht, über welche die Transporttasche seitlich manuell befüllt werden kann.

Eine alternative Beladestation für die vorgenannte Transporttasche ist aus DE 102008061685 A1 bekannt.

US 2024/0417194 A1 beschreibt eine Entladevorrichtung für ähnliche, an einem unteren Ende mit einer Kupplung reversibel verschliessbaren Transporttaschen eines Hängefördersystems. Eine schräg abfallende Rutsche verläuft parallel zu einem darüber angeordneten in Förderrichtung schräg abfallenden Abschnitt des Hängeförderers. Die gefüllten Transporttaschen werden auf dem Hängeförderer in Förderrichtung gefördert, wobei die Transporttaschen auf dem schräg abfallenden Abschnitt des Hängeförderers mit der unten liegenden Kupplung auf der Rutsche aufliegen. An einem unteren Ende des schräg abfallenden Abschnitts des Hängeförderers öffnet eine Öffnungseinheit die Kupplung der Tasche, so dass die Wareneinheit aus der unten geöffneten Transporttasche auf die Rutsche gleitet und von dort auf einen horizontalen Bandförderer.

EP 3301043 A1 bezieht sich auf eine Transporttasche für Hängeförderanlagen, die ein seitliches Verrutschen und Verhaken mit benachbarten Taschen verhindert. Die Transporttasche verfügt über Haftkontaktflächen auf den Aussenseiten der vorderen und/oder hinteren Seitenwände, ausgestattet mit einem Reibbelag aus einem Reibmaterial, um eine seitliche Verlagerung zweier aneinander liegender Taschen zu vermeiden. Die Haftkontaktflächen können Oberflächenstrukturen mit Erhebungen und Vertiefungen enthalten, die eine mechanische Verbindung durch Formschluss ermöglichen.

WO 2017/088076 A1 betrifft eine Transporttasche für den hängenden Transport mittels Hängeförderern, charakterisiert durch eine quer zur Transportrichtung ausgerichtete Rückwand und Vorderwand, die am oberen und unteren Taschenabschluss beweglich verbunden sind. Die Tasche wechselt zwischen einer Füllposition und Leerposition, wobei die Vorderwand ihre Position zur Rückwand ändert, und ist mittels Verbindungsmitteln an der Transportvorrichtung befestigbar. Schliesslich ermöglichen erste Führungselemente an der Rückwand und optionale zweite Führungselemente an der Vorderwand eine präzise Führung.

CH 713082 A1 zeigt Vorrichtungen zum Befüllen und Entleeren von Transporttaschen eines Hängeförderers. Die Transporttaschen weisen eine Vorderwand und eine Rückwand auf, die schwenkbeweglich miteinander verbunden sind. An einem unteren Ende der Rückwand und an einem oberen Ende der Vorderwand sind Rollenelemente angeordnet. Zum Befüllen einer leeren Transporttasche wird diese von einer hängenden Transportlage in eine Befüllungslage verkippt. Dazu wird eine Kulissenführung nach oben verfahren, welche mit den Rollelementen am unteren Ende der Rückwand der Transporttasche wechselwirkt. Wenn die Rückwand horizontal orientiert ist und die genannten Rollelemente in eine Rastvertiefungen an der Kulissenführung einrasten, wird der Hängeförderer angehalten. Eine Rollenbahn angehoben, welche schliesslich in der Befüllungslage durch Ausnehmungen in der Vorderwand der Transporttasche ragt. Ein Stückgut wird nun horizontal zugeführt und in die geöffnete Transporttasche eingeschoben, wobei es innerhalb der Transporttasche auf der Rollenbahn rollt. Anschliessend wird die Rollenbahn und die Kulissenführung wieder abgesenkt, bis die Rollelemente am unteren Ende der Rückwand der Transporttasche wieder frei sind und die nun gefüllte Transporttasche wieder in die Transportlage schwenkt. Die Transporttasche wird nun auf dem Hängeförderer weitergefördert. Zum Entleeren einer gefüllten Transporttasche wird diese von einer hängenden Transportlage in eine Entleerungslage verkippt. Dazu wird eine Kulissenführung nach oben verfahren, welche mit den Rollelementen am unteren Ende der Rückwand der Transporttasche wechselwirkt. Wenn die genannten Rollelemente in eine Rastvertiefungen an der Kulissenführung einrasten und die Rückwand horizontal orientiert ist, wird der Hängeförderer angehalten. Anschliessend wird ein Abschnitt des Hängeförderers mitsamt dem Laufwagen der Transporttasche abgesenkt, so dass nun Vorderwand und Rückwand in Förderrichtung nach unten geneigt sind, und eine Rollenbahn durch die Ausnehmungen in der Vorderwand ragt. Das Stückgut rollt nun schwerkraftgetrieben auf der Rollenbahn aus der Transporttasche heraus. Solche Vorrichtungen weisen mehrere bewegliche Elemente auf, was die Komplexität der Vorrichtung erhöht. Zudem ist die Umsatzgeschwindigkeit durch den Zeitbedarf der vertikalen Bewegung der Kulissenführung und anderer Elemente beschränkt.

Der Stand der Technik weist einige Nachteile auf. Erstens sind die heutigen technischen Lösungen oft durch eine hohe Komplexität in ihren Konstruktionen gekennzeichnet, was zu grösseren Kosten in der Anschaffung und Wartung führt. Zweitens besteht eine Herausforderung in der Ausrichtung und Stabilisierung von Hängetransporteinheiten, bspw. Transporttaschen während des Belade- und Entladevorgangs. Viele Systeme bieten keine spezifischen Mechanismen zur Unterstützung der Ausrichtung, was die Präzision und Effizienz des Beladungs- und Entladevorgangs beeinträchtigt. Drittens wird im Stand der Technik das Thema der Kräfte, die auf Hängetransporteinheiten während des Beladungs- und Entladevorgangs wirken, nicht ausreichend thematisiert und behandelt, wobei höhere Kräfte zu einem erhöhten Risiko eines schnellen Verschleisses der Hängeförderelemente führen können. Schliesslich erfordern Fördersysteme häufig eine speziell angefertigte Transporttasche, die genau auf die technische Lösung abgestimmt ist, wobei eine einfache Nachrüstung bestehender Taschen nicht möglich ist. Vielmehr ist eine vollständige Umgestaltung erforderlich, was zusätzliche Kosten verursacht.

Es besteht ein allgemeines Bedürfnis nach Verbesserungen in diesem Gebiet.

### Darstellung der Erfindung

In dieser Beschreibung werden die Begriffe Waren, Wareneinheit, Güter, Artikel und Stückgüter synonym verwendet, und können insbesondere einzelne Warenobjekte, aber auch verpackte Waren wie beispielsweise Pakete umfassen, und ganz generell einzeln handhabbare Objekte, insbesondere auch Halbprodukte, Ersatzteile etc..

Eine Aufgabe der Erfindung besteht darin, mindestens einigen der Nachteile des Standes der Technik entgegenzuwirken. Insbesondere soll die Erfindung eine einfachere mechanische Lösung sowie eine genauere Ausrichtung und gute Stabilisierung der Hängeförderelemente während des Belade- und Entladevorgangs ermöglichen und gleichzeitig die auf die Hängeförderelemente wirkenden Kräfte reduzieren.

Diese Aufgabe wird durch die Merkmale der unabhängigen Patentansprüche gelöst. Weitere vorteilhafte Ausführungsformen sind in den abhängigen Ansprüchen gegeben.

Die erfindungsgemässe Lösung kann durch verschiedene, jeweils für sich vorteilhafte und, sofern nicht anders dargelegt, miteinander kombinierbare Ausgestaltungen weiter verbessert werden. Auf diese Ausführungsformen und die mit ihnen verbundenen Vorteile wird im Folgenden eingegangen.

Ein erster Aspekt der Erfindung betrifft eine Beladevorrichtung zum Beladen von Transporteinheiten in einer Hängefördervorrichtung.

Eine solche erfindungsgemässe Beladevorrichtung umfasst:
- eine Hängefördervorrichtung mit mindestens einer Transporteinheit mit einem Tragelement und einer am Tragelement schwenkbar hängend gelagerten Transporttasche, wobei die Hängefördervorrichtung dazu ausgelegt ist, die mindestens eine Transporteinheit entlang eines Förderpfades in einer Förderrichtung zu fördern, wobei die Transporttasche der mindestens einen Transporteinheit eine Rückwand aufweist, welche am Tragelement der Transporteinheit schwenkbar hängend gelagert ist, und wobei die genannte Rückwand zwei Lagerpunkte aufweist, die je auf einer Seite der Rückwand seitlich hervorstehend angeordnet sind, sowie eine mit der Rückwand beweglich verbundene Vorderwand, welche in die Förderrichtung der Rückwand vorausläuft;
- eine Schwenkvorrichtung, welche eingerichtet ist, mit der Vorderwand der Transporttasche einer entlang des Förderpfads der Hängefördervorrichtung geförderten Transporteinheit zu wechselwirken, um die Transporttasche während der Förderung entlang eines ersten Abschnitts des Förderpfads von einer senkrechten ersten Orientierung in eine gegenüber der Senkrechten geschwenkte zweite Orientierung zu schwenken;
- eine erste Stützvorrichtung, welche eingerichtet ist, mittels den zwei Lagerpunkten der Rückwand der Transporttasche einer in die zweite Orientierung geschwenkten Transporttasche während der Förderung entlang eines zweiten Abschnitts des Förderpfades zu stützen; und
- eine zweite Stützvorrichtung, welche eingerichtet ist, die Vorderwand der Transporttasche während der Förderung entlang eines dritten Abschnitts des Förderpfades zu stützen.

Die erste Stützvorrichtung und die zweite Stützvorrichtung sind dabei derart ausgestaltet, dass in demjenigen Bereich, in welchem der zweite Abschnitt und der dritte Abschnitt des Förderpfades überlappen, die Transporttasche eine festgelegte, geometrisch definierte Öffnung aufweist.

Die Position einer Transporteinheit beziehungsweise einer Transporttasche auf den genannten ersten, zweiten oder dritten Abschnitten des Förderpfades bezieht sich dabei auf die Position des Tragelements der dazugehörigen Transporteinheit auf der Trajektorie der Hängefördervorrichtung.

Dabei beginnt der erste Abschnitt des Förderpfads, sobald die Vorderwand der Transporttasche der Transporteinheit mit der Schwenkvorrichtung wechselwirkt, und endet, sobald die Wechselwirkung zwischen der genannten Vorderwand und der genannten Schwenkvorrichtung endet. Der zweite Abschnitt des Förderpfads beginnt, sobald die beiden Lagerpunkte der Rückwand der Transporttasche der Transporteinheit durch die erste Stützvorrichtung gestützt werden, und endet, sobald die genannten beiden Lagerpunkte nicht mehr durch die genannte erste Stützvorrichtung gestützt werden. Der dritte Abschnitt des Förderpfads beginnt, sobald die Vorderwand der Transporttasche der Transporteinheit durch die zweite Stützvorrichtung gestützt wird, und endet, sobald die genannte Vorderwand nicht mehr durch die genannte zweite Stützvorrichtung gestützt wird.

Befindet sich also beispielsweise die Transporttasche im zweiten Abschnitt des Förderpfades, so bedeutet dies, dass sich ihr an der Hängefördervorrichtung angeordnetes Tragelement auf der Trajektorie der Hängefördervorrichtung in diesem zweiten Abschnitt befindet, wobei sich die Definition des zweiten Abschnitts jedoch auf die Interaktion zwischen der ersten Stützvorrichtung und den zwei Lagerpunkten bezieht.

Eine erfindungsgemässe Beladevorrichtung bietet mehrere signifikante Vorteile.

Zum einen ist es die Einfachheit der mechanischen Konstruktion der Beladevorrichtung, die mit weniger komplexen elektronische Steuerungssystemen auskommt. Dies führt zu einer signifikanten Kostenersparnis, sowohl in der Anschaffung als auch im Betrieb, insbesondere in Bezug auf die Wartung als auch auf die Energieeffizienz beiträgt.

Ein weiterer Vorteil dieser Lösung liegt in der Kompatibilität mit einfachen Transporttaschen. Im Gegensatz zu Systemen, die auf komplexe Mechanismen wie beispielsweise in den Transporttaschen integrierte Kugelgelenke und ähnliches zu ihrer Ausrichtung und Beladung angewiesen sind, ermöglicht die erfindungsgemässe Beladevorrichtung die Verwendung einfacherer und kostengünstigerer Transporttaschenmodelle. Diese Vereinfachung reduziert nicht nur die direkten Kosten für die Transporttaschen selbst, sondern minimiert auch den Wartungsaufwand. Einfachere Transporttaschen bedeuten weniger bewegliche Teile, die ausfallen können oder ersetzt werden müssen, was wiederum die Betriebskosten senkt und die Betriebszeit der gesamten Anlage erhöht.

Zudem zeichnet sich die erfindungsgemässe Beladevorrichtung durch eine schonende Behandlung der Transporttaschen aus, was nicht nur die Lebensdauer der Transporttaschen verlängert, sondern auch die Sicherheit und Zuverlässigkeit des Förderprozesses erhöht. Ferner minimiert es auch das Risiko der Beschädigung von Stückgütern während des Beladeprozesses.

Weiterhin sei hervorgehoben, dass die spezifische Anordnung der ersten und der zweiten Stützvorrichtung dazu führt, dass die Transporttasche eine vordefinierte, geometrisch festgelegte Öffnung besitzt. Diese vordefinierte, geometrisch festgelegte Öffnung der Transporttasche erleichtert den Beladeprozess erheblich, da die Position der Öffnung der Transporttasche, durch welche die Beladung erfolgen soll, stets gleich ist. Es entfällt insbesondere die Notwendigkeit zusätzlicher Sensoren, um die Position der Öffnung zu bestimmen und den Beladevorgang daran anzupassen.

Es ist ebenfalls von Vorteil, dass die zweite Stützvorrichtung die Vorderwand der Transporttasche während des Beladevorgangs von unten unterstützt, wodurch die Transporttasche weniger mechanisch belastet wird. Diese Unterstützung von unten trägt dazu bei, die strukturelle Integrität der Transporttasche während des Beladeprozesses zu bewahren und verhindert, dass sich die Transporttasche unter dem Gewicht der Stückgüter ungewollt verformt oder absinkt.

In einer vorteilhaften Ausführungsform einer erfindungsgemässen Beladevorrichtung verlaufen in demjenigen Bereich, in welchem der zweite Abschnitt und der dritte Abschnitt des Förderpfades überlappen, die erste Stützvorrichtung und die zweite Stützvorrichtung parallel zueinander.

Besonders vorteilhaft ist dabei die Distanz zwischen der ersten Stützvorrichtung und der zweiten Stützvorrichtung kleiner als die die maximal mögliche Distanz zwischen der Vorderwand und der Rückwand der Transporttasche.

Diese Anordnung führt dazu, dass die Transporttasche sich nicht bis zur maximal möglichen Distanz zwischen der Vorderwand und der Rückwand der Transporttasche öffnen kann. Stattdessen ist die resultierende Öffnung der Transporttasche durch die Distanz zwischen der ersten Stützvorrichtung und der zweiten Stützvorrichtung gegebenen, so dass bei bekannter Position und Geometrie der Transporttasche die Position der Öffnung der Transporttasche verlässlich direkt bestimmt werden kann.

Gemäss einer weitere vorteilhaften Ausführungsform einer erfindungsgemässen Beladevorrichtung ist vorgesehen, dass der dritte Abschnitt des Förderpfades stromabwärts auf den ersten Abschnitt folgt und nicht mit diesem überlappt.

Die Transporttasche wird somit im ersten Abschnitt in ihre Schwenkposition gebracht, während sie erst im dritten Abschnitt gestützt wird, um so sicher beladen werden zu können. Auf diese Weise wird eine klare, stabile Abfolge der Schritte im Ablauf geschaffen, in welchem das Schwenken der Transporttasche und das Öffnen der Transporttasche getrennte Schritte sind.

Gemäss einer weiteren vorteilhaften Ausführungsform einer erfindungsgemässen Beladevorrichtung ist vorgesehen, dass die Schwenkvorrichtung als passive, insbesondere als nicht aktiv angetriebene Einrichtung ausgestaltet ist, welche die Vorderwand der Transporttasche der Transporteinheit beim Fördern der Transporteinheit im ersten Abschnitt kontaktiert.

Diese Gestaltung ermöglicht eine Reduzierung der mechanischen Komplexität der Vorrichtung. Da die Schwenkvorrichtung keine aktiven Bewegungselemente benötigt, entfallen die Notwendigkeit für Motoren, Sensoren und die dazugehörige Steuerungselektronik. Diese Vereinfachung führt zu einer kostengünstigeren Produktion und Installation sowie zu einer Verringerung der Wartungskosten über die Lebensdauer der Anlage hinweg. Weiter verringert sich die Komplexität der Steuerungssoftware der Beladevorrichtung, da weniger Aktuatoren und Sensoren vorhanden sind.

Weiter erhöht sich die Zuverlässigkeit der Förderanlage. Bei passiven Systemen sind weniger bewegliche Teile vorhanden, die ausfallen können. Dies führt zu einer verbesserten Verfügbarkeit der Anlage und einer Verringerung von Ausfallzeiten.

In einer weiteren vorteilhaften Ausführungsform einer erfindungsgemässen Beladevorrichtung weist die Schwenkvorrichtung eine Rampe, einen Anschlag, eine Hürde und/oder mindestens eine waagrechte, quer zum Förderpfad angeordnete Rolle auf.

Ein Vorteil dieser Konfiguration liegt in der Einfachheit und Robustheit des Designs. Rampen und Rollen sind mechanisch einfache Elemente, die eine hohe Zuverlässigkeit und Langlebigkeit bei minimaler Wartung bieten. Diese Eigenschaften tragen dazu bei, die Betriebskosten zu senken und die Verfügbarkeit der Anlage zu erhöhen, indem Ausfallzeiten durch Defekte oder Wartungsarbeiten reduziert werden.

Weiterhin ermöglicht die Verwendung einer Rampe oder Rolle eine sanfte und kontrollierte Schwenkbewegung der Transporttasche. Dies ist besonders vorteilhaft bei höheren Betriebsgeschwindigkeiten, da abrupte Bewegungen, die zu einer Beschädigung der Transporttaschen führen könnten, vermieden werden.

Darüber hinaus bietet diese Ausführungsform eine hohe Flexibilität im Hinblick auf die Anpassungsfähigkeit an verschiedene Taschengrössen und -formen. Sowohl Rampen als auch Rollen können so gestaltet werden, dass sie mit einer breiten Palette von Transporttaschen kompatibel sind, ohne dass eine umfangreiche Anpassung der Vorrichtung erforderlich ist. Dies ermöglicht einen vielseitigen Einsatz der Beladevorrichtung und eine schnelle Anpassung an wechselnde Anforderungen in Logistik und Produktion.

In einer weiteren vorteilhaften Ausführungsform einer erfindungsgemässen Beladevorrichtung ist vorgesehen, dass die zwei Lagerpunkte in einem unteren Bereich der Rückwand der Transporttasche angeordnet sind.

Besonders vorteilhaft sind dabei die zwei Lagerpunkte an einem vom Tragelement der Transporteinheit abgewandten Ende der Rückwand der Transporttasche angeordnet.

Die Anordnung der Lagerpunkte im unteren Bereich der Rückwand ermöglicht eine optimierte Lastverteilung über die Rückwand der Transporttasche. Die Rückwand der Transporttasche ist somit im zweiten Abschnitt des Förderpfades an drei Punkten gelagert, nämlich im Tragelement der Transporteinheit und mit den zwei Lagerpunkten auf der ersten Stützvorrichtung. Es resultiert eine stabile, geometrisch definierte Lagerung der Rückwand der Transporttasche.

Diese Lagerpunkte können auf verschiedene Weise realisiert werden, wobei in jedem Fall die Lagerpunkte dazu eingerichtet sein müssen, mit der ersten Stützvorrichtung so zu wechselwirken, dass daraus eine Stützung der Rückwand auf der ersten Stützvorrichtung erfolgt. Beispielsweise können die Lagerpunkte als Vorsprünge, als herausstehende Drahtschlaufen, als Zapfen, Hülsen oder Rollen ausgestaltet sein.

Gemäss einer weiteren vorteilhaften Ausführungsform einer erfindungsgemässen Beladevorrichtung ist vorgesehen, dass die erste Stützvorrichtung zwei parallele Führungsschienen aufweist, welche so ausgestaltet sind, dass die zwei seitlich hervorstehenden Lagerpunkte der Rückwand beim Fördern der Transporteinheit im zweiten Abschnitt auf je einer der beiden Führungsschienen aufliegen.

Diese Konfiguration verbessert die Stabilität und Sicherheit der Transporteinheit während des Transports. Durch die Führung der Transporttasche entlang der parallelen Schienen wird sichergestellt, dass die Transporteinheit sicher entlang des Förderpfads bewegt wird. Durch die gleichzeitige seitliche formschlüssige Führung der Transporttasche durch die Führungsschienen wird die Transporttasche insbesondere auch seitlich stabilisiert.

Die Verwendung von Führungsschienen führt ebenfalls zu einer Reduzierung des Verschleisses an der Transporteinheit und der Förderanlage selbst. Die gezielte Führung minimiert die Reibung und den Kontakt mit anderen Komponenten der Anlage, was die Lebensdauer der Transporteinheiten verlängert und Wartungskosten senkt.

Darüber hinaus bietet diese Konfiguration auch ein höheres Mass an Flexibilität der Beladevorrichtung, denn die Führungsschienen können für verschiedene Typen von Transporteinheiten und Stückgütern angepasst werden, ohne dass umfangreiche Änderungen an der Struktur der Förderanlage notwendig sind.

Besonders vorteilhaft weisen bei einer solchen Ausführungsform einer Beladevorrichtung die beiden Führungsschienen auf der jeweils von der Transporttasche abgewandten Seite eine seitliche Begrenzung auf, beispielsweise ein Leitblech.

Dies verbessert die Präzision und Sicherheit des Führungssystems. Die Leitbleche dienen als physische Barrieren, die eine zusätzliche Stabilisierung der Transporteinheiten quer zum Förderpfad gewährleisten.

Die Einbeziehung seitlicher Begrenzungen, wie Leitbleche, an den beiden Führungsschienen, die jeweils auf der von der Transporttasche abgewandten Seite positioniert sind, sorgt für eine zusätzliche Stabilisierung der Transporteinheiten, indem sie ein seitliches Abrutschen oder Kippen der Transporttaschen während des Transports verhindert, ohne dass die Seitenwände der Transporttasche mit den Führungsschienen in Kontakt kommen. Dies reduziert den Verschleiss.

Gemäss einer weiteren vorteilhaften Ausführungsform einer erfindungsgemässen Beladevorrichtung ist vorgesehen, dass die zweite Stützvorrichtung eine Rolleneinrichtung aufweist, mit einer Mehrzahl von quer zum Förderpfad angeordneten Rollen.

Ein Vorteil dieser Ausführungsform liegt in der Minimierung des Widerstandes, den die Transporttaschen beim Fördern erfahren. Die Rollen ermöglichen eine reibungsarme Bewegung der Transporttaschen, was den Energieaufwand für den Transport verringert, die Effizienz der gesamten Förderanlage steigert, und den Verschleiss reduziert, insbesondere der Verschleiss an den Transporttaschen.

In einer weiteren vorteilhaften Ausführungsform einer erfindungsgemässen Beladevorrichtung weist diese eine Übergabeeinheit auf, welche dazu eingerichtet ist, ein Stückgut in die Transporttasche zu fördern, wenn sich die Transporttasche im dritten Abschnitt des Förderpfades befindet.

Ein Vorteil dieser Konfiguration ist die Erhöhung des Automatisierungsgrades im Beladeprozess. Durch die direkte Integration der Übergabeeinheit wird der Bedarf an manuellen Eingriffen minimiert. Dies führt nicht nur zu einer Produktivitätssteigerung durch die Beschleunigung des Beladevorgangs, sondern auch zu einer Reduzierung potenzieller Fehlerquellen, die durch menschliches Handeln entstehen können.

Darüber hinaus ist es besonders vorteilhaft, wenn die Übergabeeinheit über eine Positioniervorrichtung verfügt, welche die Position der Übergabeeinheit anpassen kann, um sich präzise an die Kante der Transporttasche zu positionieren. Diese zusätzliche Anpassungsfähigkeit ermöglicht eine noch genauere Platzierung der Stückgüter innerhalb der Transporttasche, was die Effizienz des Beladevorgangs steigert.

Eine solche Positioniervorrichtung kann beispielsweise in Form eines Pneumatik-Zylinders realisiert werden, der eine präzise Steuerung der Bewegungen ermöglicht.

Alternativ können auch elektrische Linearantriebe eingesetzt werden, die für ihre präzise Steuerbarkeit und Anpassungsfähigkeit an unterschiedliche Belastungszustände bekannt sind. Diese Antriebe bieten den Vorteil einer einfachen Integration in automatisierte Steuerungssysteme, die eine synchrone Anpassung der Übergabeeinheit an die dynamischen Bedingungen des Förderprozesses ermöglichen. Alternativ können auch hydraulische Aktuatoren eingesetzt werden, wenn eine noch genauere Positionierung erforderlich ist.

Am Ende der Übergabeeinheit kann zudem die Integration eines Dämpfungselements besonders vorteilhaft sein. Ein solches Dämpfungselement kann dazu beitragen, die auf die Transporttasche und deren Inhalt wirkenden Kräfte, insbesondere in dem Moment, in welchem die Transporttasche nach Beendigung des Beladevorgangs angehoben wird, zu dämpfen, wodurch das Risiko von Beschädigungen während des Anhebens minimiert wird.

Vorteilhaft stehen in einer erfindungsgemässen Beladevorrichtung die Vorderwand und die Rückwand der Transporttasche parallel zueinander und sind durch Distanzelemente schwenkbeweglich verbunden, so dass die Vorderwand und die Rückwand und die Distanzelemente zusammen ein Parallelepiped bilden.

Eine solche Konfiguration ist besonders vorteilhaft für das Festlegen einer geometrisch definierten Öffnung der Transporttasche durch die erste Stützvorrichtung und die zweite Stützvorrichtung.

Diese Konfiguration ermöglicht weiter eine optimale Raumausnutzung innerhalb der Transporttasche, da die parallele Ausrichtung der Wände einen gleichmässig gestalteten Innenraum schafft, der die Lagerung und den Transport von Stückgütern erleichtert, insbesondere von quaderförmigen Verpackungen. Die Transporttasche kann sich durch die schwenkbeweglichen Distanzelemente dynamisch an ihren anpassen. Diese Flexibilität in der Anpassung der Taschendicke an das jeweilige Ladungsvolumen führt zu einer effizienteren Ausnutzung des verfügbaren Raumes innerhalb der Förderanlage und ermöglicht somit eine Optimierung der Transportkapazitäten.

Ein zweiter Aspekt der Erfindung betrifft eine zum Entladen von mit Stückgütern beladenen Transporteinheiten in einer Hängefördervorrichtung.

Eine solche erfindungsgemässe Entladevorrichtung umfasst:
- eine Hängefördervorrichtung mit mindestens einer Transporteinheit mit einem Tragelement und einer am Tragelement schwenkbar hängend gelagerten Transporttasche, wobei die Hängefördervorrichtung dazu ausgelegt ist, die mindestens eine Transporteinheit entlang eines Förderpfades in einer Förderrichtung zu fördern, wobei die Transporttasche der mindestens einen Transporteinheit eine Rückwand aufweist, welche am Tragelement der Transporteinheit schwenkbar hängend gelagert ist, und wobei die genannte Rückwand zwei Lagerpunkte aufweist, die je auf einer Seite der Rückwand seitlich hervorstehend angeordnet sind, sowie eine mit der Rückwand beweglich verbundene Vorderwand, welche in Förderrichtung der Rückwand vorausläuft;
- eine Schwenkvorrichtung, welche eingerichtet ist, mit der Vorderwand der Transporttasche einer entlang des Förderpfades der Hängefördervorrichtung geförderten Transporteinheit zu wechselwirken, um die Transporttasche während der Förderung entlang eines ersten Abschnitts des Förderpfades von einer senkrechten ersten Orientierung in eine gegenüber der Senkrechten geschwenkte zweite Orientierung zu schwenken; und
- eine erste Stützvorrichtung, welche eingerichtet ist, mittels den zwei Lagerpunkten der Rückwand der Transporttasche einer in die zweite Orientierung geschwenkten Transporttasche während der Förderung entlang eines zweiten Abschnitts des Förderpfades zu stützen.

Die Hängefördervorrichtung und die erste Stützvorrichtung sind dabei so ausgestaltet, dass in einem dritten Abschnitt des Förderpfades, die Rückwand der Transporteinheit in Förderrichtung so weit nach hinten geschwenkt ist, dass die Rückwand eine negative Steigung aufweist.

Eine negative Steigung der Rückwand der Transporttasche der Transporteinheit ist dabei im Rahmen dieser Beschreibung so zu verstehen, dass ein unteres, vom Tragelement abgewandtes Ende der Rückwand (welches in der senkrechten Transportposition das untere Ende ist) sich oberhalb des oberen Endes der Rückwand (welches in der senkrechten Transportposition das obere Ende ist) befindet. Es liegt also ein in Förderrichtung ein Gefälle zwischen dem unteren Ende der Rückwand und dem oberen Ende der Rückwand vor.

Eine solche Entladevorrichtung weist verschiedene Vorteile auf.

Die schwenkbare Anordnung der Transporttasche am Tragelement erlaubt eine flexible Anpassung der Taschenpositionierung während des Entladeprozesses.

Die Position einer Transporteinheit beziehungsweise einer Transporttasche auf den genannten ersten, zweiten oder dritten Abschnitten des Förderpfades bezieht sich auf die Position des Tragelements der dazugehörigen Transporteinheit auf der Trajektorie der Hängefördervorrichtung.

Dabei beginnt der erste Abschnitt des Förderpfads, sobald die Vorderwand der Transporttasche der Transporteinheit mit der Schwenkvorrichtung wechselwirkt, und endet, sobald die Wechselwirkung zwischen der genannten Vorderwand und der genannten Schwenkvorrichtung endet. Der zweite Abschnitt des Förderpfads beginnt, sobald die beiden Lagerpunkte der Rückwand der Transporttasche der Transporteinheit durch die erste Stützvorrichtung gestützt werden, und endet, sobald die genannten beiden Lagerpunkte nicht mehr durch die genannte erste Stützvorrichtung gestützt werden. Der dritte Abschnitt des Förderpfads beginnt, sobald die Rückwand der Transporttasche eine negative Steigung erreicht, und endet, sobald die Rückwand der Transporttasche keine negative Steigung mehr aufweist.

Befindet sich also beispielsweise die Transporttasche im zweiten Abschnitt des Förderpfades, so bedeutet dies, dass sich ihr an der Hängefördervorrichtung angeordnetes Tragelement auf der Trajektorie der Hängefördervorrichtung in diesem zweiten Abschnitt befindet, wobei sich die Definition des zweiten Abschnitts jedoch auf die Interaktion zwischen der ersten Stützvorrichtung und den zwei Lagerpunkten bezieht.

Die Schwenkvorrichtung, die mit der Vorderwand der Transporttasche interagiert, gewährleistet eine präzise Steuerung der Taschenorientierung, was den automatisierten Entladeprozess vereinfacht und beschleunigt. Dieser Mechanismus stellt sicher, dass die Transporttasche in den Winkel geschwenkt wird, der für eine sichere Übernahme der Transporttasche durch die erste Stützvorrichtung notwendig ist.

Die Integration einer Stützvorrichtung, die darauf ausgerichtet ist, die Lagerpunkte der Rückwand der Transporttasche während der Förderung zu stützen, trägt zur Stabilität der Transporttasche bei. Diese Stabilität ist wichtig, um ein sicheres und kontrolliertes Entladen der Stückgüter aus der Transporttasche zu ermöglichen. Durch die Vermeidung unnötiger Bewegungen oder Schwankungen der Transporttasche während des Entladevorgangs wird das Risiko einer Beschädigung der Stückgüter minimiert. Es wird zudem sichergestellt, dass die Stückgüter gezielt in dem vorgesehenen Abschnitt entladen werden.

Dadurch, dass im dritten Abschnitt des Förderpfades die Rückwand der Transporteinheit in Förderrichtung eine negative Steigung aufweist, können die Stückgüter in der Transporttasche Stückgüter aufgrund der Schwerkraft automatisch aus der Transporttasche herausgleiten. Es entfällt die Notwendigkeit zusätzlicher Aktuatoren, insbesondere elektronischer, pneumatischer, hydraulischer oder andere Bauteile. Diese Gestaltung trägt zu einer Vereinfachung des Entladeprozesses bei, reduziert den Energieverbrauch der Entladevorrichtung und minimiert den Wartungsaufwand. Die Zuverlässigkeit der Gesamtanlage ist verbessert, da weniger angetriebene Teile und Komponenten vorhanden sind, die ausfallen könnten.

In einer vorteilhaften Ausführungsform umfasst eine erfindungsgemässen Entladevorrichtung eine Entladerutsche, welche dazu eingerichtet ist, in dem dritten Abschnitt des Förderpfads aus der Transporttasche der Transporteinheit gleitende Stückgüter zu übernehmen, so dass die übernommenen Stückgüter auf der Entladerutsche schwerkraftgetrieben zu einem Zielbereich gleiten können.

Ein Vorteil einer solchen Lösung liegt in der Optimierung des Materialflusses. Indem die Stückgüter direkt nach dem Verlassen der Transporttasche auf eine Rutsche geleitet werden, die sie zu einem bestimmten Zielbereich führt, werden Zwischenschritte eliminiert. Dies erhöht die Geschwindigkeit und Effizienz des Entladeprozesses.

Darüber hinaus verbessert die Entladerutsche die Sicherheit und Integrität der transportierten Stückgüter. Durch das kontrollierte Gleiten auf der Rutsche werden Stösse und Stürze, die beim direkten Fallenlassen der Stückgüter auf den Boden oder auf ein Förderband entstehen könnten, vermieden. Dies ist besonders wichtig für fragile oder empfindliche Stückgüter, deren Beschädigungsrisiko so minimiert wird.

Gemäss einer weiteren vorteilhaften Ausführungsform einer erfindungsgemässen Entladevorrichtung ist vorgesehen, dass die Schwenkvorrichtung als passive, insbesondere als nicht aktiv angetriebene Einrichtung ausgestaltet ist, welche die Vorderwand der Transporttasche der Transporteinheit beim Fördern der Transporteinheit im ersten Abschnitt kontaktiert.

Diese Gestaltung ermöglicht eine Reduzierung der mechanischen Komplexität der Vorrichtung. Da die Schwenkvorrichtung keine aktiven Bewegungselemente benötigt, entfallen die Notwendigkeit für Motoren, Sensoren und die dazugehörige Steuerungselektronik. Diese Vereinfachung führt zu einer kostengünstigeren Produktion und Installation sowie zu einer Verringerung der Wartungsanforderungen und -kosten über die Lebensdauer der Anlage hinweg. Weiter verringert sich die Komplexität der Steuerungssoftware der Beladevorrichtung, da weniger Aktuatoren und Sensoren vorhanden sind.

Weiter erhöht sich die Zuverlässigkeit der Förderanlage. Bei passiven Systemen sind weniger Teile vorhanden, die ausfallen können. Dies führt zu einer verbesserten Verfügbarkeit der Anlage und einer Verringerung von Ausfallzeiten, was in Produktions- und Logistikumgebungen von Bedeutung ist.

In einer weiteren vorteilhaften Ausführungsform einer erfindungsgemässen Entladevorrichtung weist die Schwenkvorrichtung eine Rampe, einen Anschlag, eine Hürde und/oder mindestens eine waagrechte, quer zum Förderpfad angeordnete Rolle auf.

Die Integration einer Rampe in die Schwenkvorrichtung bietet eine kontinuierliche, schonende Führung der Transporttasche von einer vertikalen in eine geneigte Position, was den Übergang in den zweiten Abschnitt des Förderpfads erleichtert.

Eine Schwenkvorrichtung mit einer waagrechten Rolle erlaubt es, eine Transporttasche mit minimaler Reibung zu schwenken, was bei der Handhabung von mit schweren oder voluminösen Stückgütern beladenen Transporttasche die Transporttasche mechanisch schont.

Solche Schwenkvorrichtungen sind wartungsfreundlich. Die Verwendung von Rampen und Rollen reduziert die Anzahl der angetriebenen Teile und die Komplexität des Systems, was zu einer Verringerung der Wartungsanforderungen und einer Verlängerung der Lebensdauer der Komponenten führt.

In einer weiteren vorteilhaften Ausführungsform einer erfindungsgemässen Entladevorrichtung sind die zwei Lagerpunkte in einem unteren Bereich der Rückwand der Transporttasche angeordnet.

Besonders vorteilhaft sind dabei die zwei Lagerpunkte an einem vom Tragelement der Transporteinheit abgewandten Ende der Rückwand der Transporttasche angeordnet.

Die Anordnung der Lagerpunkte im unteren Bereich der Rückwand ermöglicht eine optimierte Lastverteilung über die Rückwand der Transporttasche. Die Rückwand der Transporttasche ist somit im zweiten Abschnitt des Förderpfades an drei Punkten gelagert, nämlich im Tragelement der Transporteinheit und mit den zwei Lagerpunkten auf der ersten Stützvorrichtung. Es resultiert eine stabile, geometrisch definierte Lagerung der Rückwand der Transporttasche.

Diese Lagerpunkte können auf verschiedene Weise realisiert werden, wobei in jedem Fall die Lagerpunkte dazu eingerichtet sein müssen, mit der ersten Stützvorrichtung so zu wechselwirken, dass daraus eine Stützung der Rückwand auf der ersten Stützvorrichtung erfolgt. Beispielsweise können die Lagerpunkte als Vorsprünge, als herausstehende Drahtschlaufen, als Zapfen, Hülsen, oder Rollen ausgestaltet sein.

Gemäss einer weiteren vorteilhaften Ausführungsform einer erfindungsgemäss Entladevorrichtung ist vorgesehen, dass die erste Stützvorrichtung zwei parallele Führungsschienen aufweist, welche so ausgestaltet sind, dass die zwei seitlich hervorstehenden Lagerpunkte der Rückwand beim Fördern der Transporteinheit im zweiten Abschnitt auf je einer der beiden Führungsschienen aufliegen.

Diese Konfiguration erhöht die Stabilität und Sicherheit der Transporteinheit während des Transports. Durch die Führung entlang der parallelen Schienen wird sichergestellt, dass sich die Transporteinheit gleichmässig entlang des Förderweges bewegt.

Bei der erfindungsgemässen Entladevorrichtung hat eine solche Konfiguration weiter den Vorteil, dass im dritten Abschnitt des Förderpfades, in dem die Rückwand der Transporteinheit in Förderrichtung eine negative Steigung aufweist, kein schwerkraftbedingtes seitliches Ausscheren der Transporttasche möglich ist, da die beiden Führungsschienen die Transporttasche seitlich formschlüssig einschliessen.

Die Verwendung von Führungsschienen reduziert auch den Verschleiss an der Transporteinheit und der Förderanlage selbst. Die gezielte Führung minimiert die Reibung und den Kontakt mit anderen Anlagenkomponenten, was die Lebensdauer der Transporteinheiten und der Schienen verlängert und die Wartungskosten senkt.

Darüber hinaus erhöht diese Konfiguration die Flexibilität der Entladevorrichtung, da die Führungsschienen an verschiedene Arten von Transporteinheiten und Stückgütern angepasst werden können, ohne dass grössere Änderungen an der Struktur der Förderanlage erforderlich sind.

Besonders vorteilhaft weisen bei einer solchen Ausführungsform einer Entladevorrichtung die beiden Führungsschienen auf der jeweils von der Transporttasche abgewandten Seite eine seitliche Begrenzung auf, beispielsweise ein Leitblech.

Dies verbessert die Präzision und Sicherheit des Führungssystems. Die Leitbleche dienen als physische Barrieren, die eine zusätzliche Stabilisierung der Transporteinheiten quer zum Förderpfad gewährleisten.

Die Einbeziehung seitlicher Begrenzungen, wie Leitbleche, an den beiden Führungsschienen, die jeweils auf der von der Transporttasche abgewandten Seite positioniert sind, sorgt für eine zusätzliche Stabilisierung der Transporteinheiten, indem sie ein seitliches Abrutschen oder Kippen der Transporttaschen während des Transports verhindert, ohne dass die Transporttasche selbst mit den Führungsschienen in Kontakt kommt.

In einer weiteren vorteilhaften Ausführungsform einer erfindungsgemässen Entladevorrichtung weist die erste Stützvorrichtung ein Vibrationsmittel auf.

Ein solches Vibrationsmittel ist dazu vorgesehenen, eine Transporttasche gezielt in Schwingung zu versetzen beziehungsweise zu vibrieren, um das Herausgleiten der Stückgüter aus der Transporttasche zu erleichtern. Die Vibrationen erleichtern das Entladen von Stückgütern aus der Transporttasche, indem sie die Reibung zwischen den Stückgütern und der Tascheninnenseite reduzieren. Durch die gezielte Anwendung von Vibrationen auf die Transporteinheit oder die Transporttasche können zudem verklemmte oder an der Innenwand anhaftende Ladungen gelockert werden, so dass ein problemloses Entladen ermöglicht wird.

Solche Vibrationsmittel können beispielsweise mit Aktuatoren realisiert werden, welche mit einer Transporttasche wechselwirken und diese gezielt in Schwingung versetzen. Dazu können die Aktuatoren die Transporttasche direkt rütteln, oder sie können einen Teil der ersten Stützvorrichtung rütteln, wenn sich die Lagerpunkte der Transporttasche darauf befinden.

Alternativ kann ein solches Vibrationsmittel auch als passive Einrichtung ausgestaltet werden, beispielsweise als sägezahnförmig oder treppenförmig ausgestalteter Abschnitt einer Führungsschiene der ersten Stützvorrichtung. Gleiten oder rollen die Lagerpunkte der Transporttasche bei der Förderung der Transporteinheit entlang des Förderpfads über diesen Abschnitt der Führungsschiene, so springen dabei die Lagerpunkte; und die Transporttasche wird entsprechend gerüttelt. Die beiden Führungsschienen können dabei auch so ausgestaltet sein, dass auch seitlich, quer zur Förderrichtung eine Rüttelbewegung der Transporttasche entsteht, beispielsweise durch eine Phasenverschiebung der parallelen, sägezahnförmig oder treppenförmig Führungsschienen in Förderrichtung.

Vorteilhaft stehen in einer erfindungsgemässen Entladevorrichtung die Vorderwand und die Rückwand der Transporttasche parallel zueinander und sind durch Distanzelemente schwenkbeweglich verbunden, so dass die Vorderwand und die Rückwand und die Distanzelemente zusammen ein Parallelepiped bilden.

Die aus dieser Konfiguration folgende parallele Ausrichtung der Vorderwand und Rückwand der Transporttasche erlaubt ein zuverlässiges Herausgleiten eines Stückgutes aus der Transporttasche im dritten Abschnitt des Förderpfades. Da die Rückwand der Transporteinheit in Förderrichtung eine negative Steigung aufweist, weist auch die Vorderwand der Transporttasche eine negative Steigung auf. Die Ladung der Transporttasche kann nun auf der Innenseite der Vorderwand nach unten aus der Öffnung der Transporttasche herausgleiten, und gelangt auf die Entladerutsche.

Ein dritter Aspekt der Erfindung betrifft eine Hängeförderanlage.

Eine solches erfindungsgemässe Hängeförderanlage umfasst mindestens eine erfindungsgemässe Beladevorrichtung und/oder mindestens eine erfindungsgemässe Entladevorrichtung.

Eine solche erfindungsgemässe Hängeförderanlage hat den Vorteil, dass die Hängefördervorrichtung der Beladevorrichtung und/oder der Entladevorrichtung als Teil einer Hängefördervorrichtung der Hängeförderanlage ausgestaltet werden können, was Schnittstellen vermeidet.

Eine Hängeförderanlage, die sowohl Beladevorrichtungen als auch Entladevorrichtungen integriert, bietet den Vorteil, dass ein komplexer Logistikprozess innerhalb einer einzigen Hängefördervorrichtung realisiert werden kann.

Die Kombination von Belade- und Entladevorrichtungen führt zu einer erheblichen Reduzierung des manuellen Handhabungsaufwands. Automatisierte Belade- und Entladevorgänge reduzieren die Notwendigkeit für manuelle Eingriffe, verringern das Risiko von Arbeitsunfällen und verbessern die Arbeitsbedingungen für das Personal.

Weiter ist die Präzision und Sicherheit beim Umgang mit den Stückgütern erhöht. Automatisierte Prozesse gewährleisten eine gleichbleibende Handhabung der Ladungen, was das Risiko von Beschädigungen minimiert.

Schliesslich ermöglicht die Integration von Belade- und Entladevorrichtungen in ein einheitliches System eine effizientere Raum- und Ressourcennutzung. Die Kombination beider Funktionen in einer Hängeförderanlage reduziert den Bedarf an zusätzlichem Equipment und spart wertvollen Platz.

### Figurenbeschrieb

Zum besseren Verständnis der vorliegenden Erfindung wird nachfolgend auf die Zeichnungen Bezug genommen. Diese zeigen lediglich Ausführungsbeispiele des Erfindungsgegenstands und sind nicht dazu geeignet, die Erfindung auf die hierin offenbarten Merkmale zu beschränken.

Für gleiche oder gleich wirkende Teile werden in den nachfolgenden Figuren und der dazugehörigen Beschreibung gleiche oder ähnliche Bezugszeichen verwendet.
- Figur 1A: zeigt eine schematische Perspektivansicht einer leeren Transporttasche mit Blick auf die Rückwand.
- Figur 1B: zeigt eine schematische Seitenansicht der Transporttasche aus Figur 1A im beladenen Zustand, mit Blick auf die Vorderwand.
- Figuren 2A-2C: zeigen schematische Rückansichten von drei Transporteinheiten, mit einer Transporttasche mit jeweils verschiedenen Ausführungsformen der Lagerpunkte.
- Figuren 3A-3G: zeigen eine schematische Seitenansicht einer Beladevorrichtung in verschiedenen Phasen des Beladevorgangs.
- Figur 4: zeigt eine schematische Seitenansicht einer anderen Beladevorrichtung mit einer fest montierten Übergabeeinheit.
- Figuren 5A, 5B: zeigen eine schematische Seitenansicht einer Entladevorrichtung mit einer Entladerutsche und einem Zielbereich mit einem fahrerlosen Transportfahrzeug, in zwei verschiedenen Phasen des Entladevorgangs.
- Figur 6: zeigt eine schematische Seitenansicht einer Entladevorrichtung mit einer Entladerutsche und einem Zielbereich mit einem Liegeförderer.
- Figur 7: zeigt eine schematische Seitenansicht einer Entladevorrichtung ohne Entladerutsche und einem Zielbereich mit einem Auffangbehälter.

### Ausführung der Erfindung

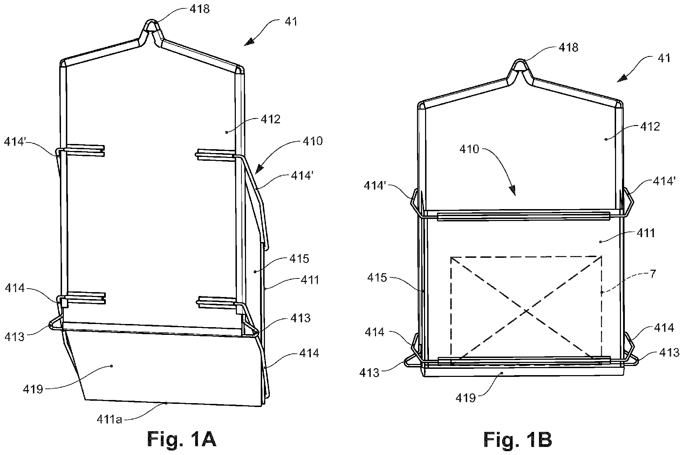

Figur 1A zeigt eine Transporttasche 41, die für die Verwendung in einer Hängefördervorrichtung 5 konzipiert ist.

Die Transporttasche 41 weist eine im Wesentlichen steife Rückwand 412 auf, bei welcher an einem oberen Ende ein Haken 418 angeordnet, mit welchem die Transporttasche an einem Tragelement (nicht dargestellt) einer Transporteinheit einer Hängefördervorrichtung hängend gelagert werden kann. Der Haken 418 ist Teil eines Drahtbügels, welcher den Kanten die Rückwand 412 umschliesst und der Rückwand mechanische Stabilität verleiht.

Eine im Wesentlichen steife, jedenfalls stabile, Vorderwand 411 ist über vier Distanzelemente 414, 414' mit der Rückwand 412 beweglich verbunden. Jedes der vier Distanzelemente 414, 414' ist mit der Rückwand 412 und der Vorderwand 411 schwenkbeweglich verbunden, so dass Rückwand 412 und Vorderwand 411 stets parallel zueinander stehen und dennoch in variabler Distanz zueinander anordenbar sind. Die Rückwand 412, die Vorderwand 411 und die Distanzelemente 414, 414' bilden ein Parallelepiped.

Die Vorderwand einer für den Einsatz in einer erfindungsgemässen Beladevorrichtung beziehungsweise einer erfindungsgemässen Entladevorrichtung geeigneten Transporttasche muss nicht zwingend steif (im engen Wortsinne) sein. Relevant ist bloss, dass Stückgüter auf der Innenseite der Vorderwand leicht gleiten können, um ein problemloses Beladen beziehungsweise Entladen zu ermöglichen. Beispielsweise ist es denkbar, dass die Vorderwand als eine auf einem Rahmen aufgespannte Folie realisiert wird. Zudem ist es denkbar, die entsprechenden Wände nicht gänzlich eben sind, wie in den gezeigten Beispielen, sondern gekrümmte Flächen oder Oberflächenstrukturierungen aufweisen, welche ein problemloses Gleiten ermöglichen. Ebenso kann es vorteilhaft sein, die Vorderwand mit einer Krümmung auszugestalten, um an der Schwenkvorrichtung eine möglichst grosse Laufruhe zu erzielen und insbesondere ruckartige Stösse zu vermeiden.

Auch die Rückwand einer solchen Transporttasche muss nicht in Ihrer Gesamtheit steif sein. Prinzipiell ist es ausreichend, dass die Grundstruktur der Rückwand ausreichend stabil ist, um eine Lagerung auf den drei Lagerpunkten (Haken 418, Lagerpunkte 413) zu ermöglichen.

Jeweils zwei Schwenkelemente 414 beziehungsweise 414' sind als ein Drahtbügel realisiert. Die Enden des Drahtbügels sind an der Rückwand 412 schwenkbeweglich gelagert, und der Mittelteil des Drahtbügels ist an der Vorderwand schwenkbeweglich gelagert.

Zwei flexible Seitenwände 415 und ein Boden 419 bilden zusammen mit der Rückwand 412 und der Vorderwand 411 einen Innenraum der Transporttasche 41, in welchem Stückgüter 7 für den Transport eingelagert werden können. An einem dem Taschenboden 419 entgegengesetzten Ende des Innenraums verbleibt eine Öffnung 410 der Transporttasche 41, durch welche die Stückgüter 7 in den Innenraum der Transporttasche eingebracht beziehungsweise aus dem Innenraum entnommen werden können.

Die in Figur 1A gezeigte Transporttasche 41 ist leer. Aufgrund des Eigengewichts von Boden 419 und Vorderwand 411 schwenken die Distanzelemente 414 nach unten, so dass die Distanz zwischen Vorderwand 411 und Rückwand 412 minimal wird.

An einem unteren Ende der Rückwand 412 bildet der umschliessende Drahtbügel der Rückwand 412 zwei nach aussen über die Rückwand vorstehende Schlaufen 413 aus. Diese begrenzen unter anderem die Schwenkbewegung der unteren Distanzelemente 414, und definieren so eine maximal geschlossene Konfiguration der Transporttasche 41. Zum anderen dienen sie als Lagerpunkte 413 der Transporttaschen 41 im Zusammenhang der erfindungsgemässen Beladevorrichtungen und Entladevorrichtungen, auf die später noch eingegangen wird.

Figur 1B zeigt die gleiche Transportasche 41, beladen mit einem Stückgut 7 in Form eines quaderförmigen Pakets. Durch das Eigengewicht von Boden 419 und Vorderwand 411 und zusätzlich das auf den Boden 419 wirkende Gewicht des Stückguts 7 wird auch hier die Vorderwand 411 in Richtung Rückwand 412 gedrückt. Das Stückgut 7 ist deshalb bündig zwischen Vorderwand 411 und Rückwand 412 eingeschlossen beziehungsweise geklemmt.

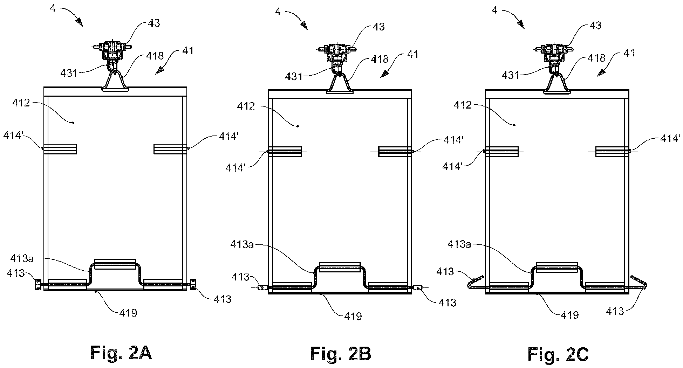

Figuren 2A-2C zeigen drei weitere Varianten einer Transporteinheit 4, welche sich durch die Ausführung der Lagerpunkte 413 unterscheiden. Die Transporteinheit 4 umfasst jeweils ein Tragelement 43 in Form eines Laufwagens, sowie eine Transporttasche 41. Die Rückwand 412 ist über einen Haken 418 auf einem Tragehaken 431 des Tragelements 43 hängend gelagert. Die oberen Distanzelemente 414' sind wie beim vorangegangenen Beispiel mit einem Drahtbügel realisiert. Die unteren Distanzelemente 414 hingegen sind durch einen mit der Rückwand 412 und der Vorderwand 411 schwenkbeweglich verbundenen, steifen Boden 419 realisiert. Die Lagerpunkte 413 sind an den Enden eines drehfest an der Rückwand 412 befestigten Drahtelements 413a befestigt.

In Figur 2A sind die Lagerpunkte 413 als Rollen ausgestaltet, welche auf dem Drahtelement 413a drehbar gelagert sind. Diese Rollen sind deshalb vorteilhaft, weil sie ein reibungsarmes Rollen auf der ersten Stützvorrichtung einer erfindungsgemässen Beladevorrichtung beziehungsweise Entladevorrichtung ermöglichen.

In Figur 2B sind die Lagerpunkte 413 als zylinderförmige Manschetten oder drehbare Buchsen aus Kunststoff, beispielsweise Polyethylen oder PTFE, realisiert, welche auf die Enden des Drahtelements 413a aufgesteckt sind. Die Manschetten beziehungsweise Buchsen reduzieren die Gleitreibung der Lagerpunkte auf einer ersten Stützvorrichtung einer erfindungsgemässen Beladevorrichtung beziehungsweise Entladevorrichtung. Die Manschetten sind kostengünstig und können schnell und problemlos ersetzt werden.

Bei der Transporteinheit in Figur 2C sind die Lagerpunkte 413 als hakenförmig umgebogene Enden des Drahtelements 413a realisiert. In diesem Fall gleiten diese umgebogenen Drahtstücke direkt auf der ersten Stützvorrichtung einer erfindungsgemässen Beladevorrichtung beziehungsweise Entladevorrichtung.

In einer noch einfacheren Ausführung dienen die beiden Enden des Drahtelements 413a ohne weitere Modifikation, als blosse hervorstehende Drahtenden, direkt als Lagerpunkte 413.

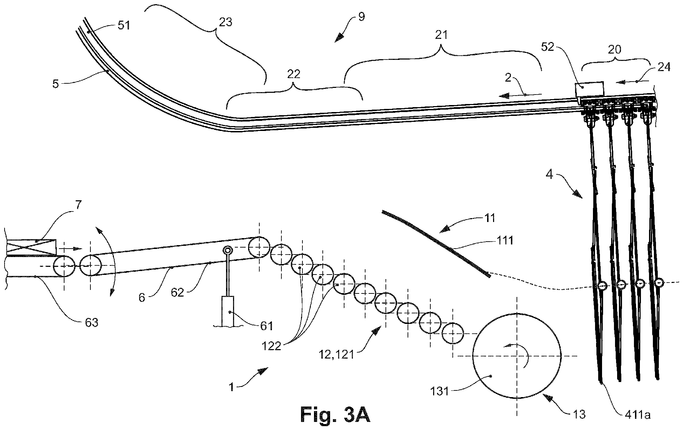

Figuren 3A-3G zeigen verschiedene Phasen eines Beladeprozesses einer Transporttasche 41 in einer vorteilhaften Ausführungsform einer erfindungsgemässen Beladevorrichtung 1. Innerhalb dieser Beladevorrichtung 1 wird eine Transporteinheit 4 entlang eines Förderpfades 2 in eine Förderrichtung 24 bewegt. Der Förderpfad 2 entsprich dabei der Förderschiene 51 der Hängefördervorrichtung 5. Die Transporteinheit 4 entspricht im Wesentlichen der Transporteinheit 4 wie sie in den Figuren 1A, 1B diskutiert worden ist.

Insbesondere möglich ist auch die Verwendung einer Transporttasche, wie sie beispielsweise in Figur 1a der Schweizer Patentanmeldung Nr. CH000981/2023 vom 7. September 2023 der gleichen Anmelderin, mit dem Titel «Vorrichtungen und Verfahren zum Beschicken von Transporttaschen eines Hängeförderers» und veröffentlich als , offenbart ist. Wie für den Fachmann ersichtlich ist, sind auch Konstruktionsteile der dort gezeigten Beladevorrichtung in geeigneter Weise bei den hier gezeigten Beladevorrichtungen beziehungsweise Entladevorrichtungen einsetzbar. Der Offenbarungsgehalt der genannten Patentanmeldung wird hiermit in seiner Gesamtheit durch Referenz in die Beschreibung mit aufgenommen.

Die Lagerpunkte 413 sind im gezeigten Beispiel als Rollen ausgestaltet. Der Taschenboden 419 ist flexibel. Der Laufwagen des Trageelements 43 ist auf der Laufschiene 51 rollend verschiebbar gelagert.

In einem stromaufwärts gelegenen Abschnitt des Förderpfads 2 werden in einer Stauzone 20 passiv durch Schwerkraft zugeförderte Transporteinheiten 4 mit leeren Transporttaschen durch ein Stopperelement 52 aufgehalten und so für die spätere Verwendung gepuffert (vgl. Figur 3A).

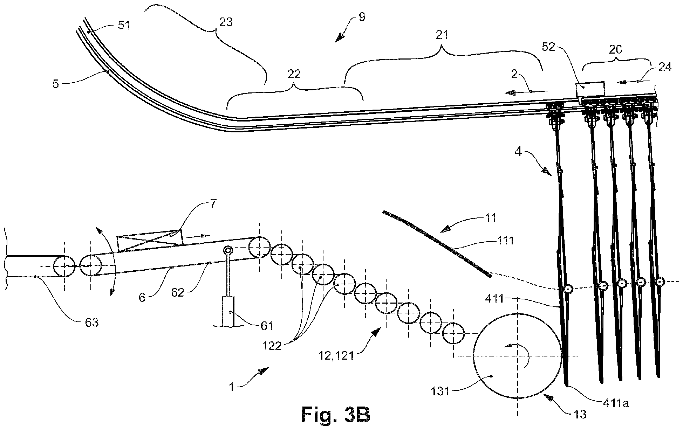

Soll nun eine Transporteinheit 4 der Beladevorrichtung 1 zugeführt werden, so gibt das Stopperelement 52 die vorderste Transporteinheit frei. Eine Antriebsvorrichtung (nicht dargestellt) wechselwirkt nun mit dem Laufwagen 43 der Transporteinheit 4 und fördert ihn aktiv in Förderrichtung 24. Die Antriebsvorrichtung kann zum Beispiel als umlaufende Antriebskette ausgestaltet sein, welche reversibel an einen Mitnehmerbolzen des Laufwagens 43 der Transporteinheit 4 koppelt. Die Transporteinheit gelangt nun zur Schwenkvorrichtung 13 der Beladevorrichtung 1 (vgl. Figur 3B).

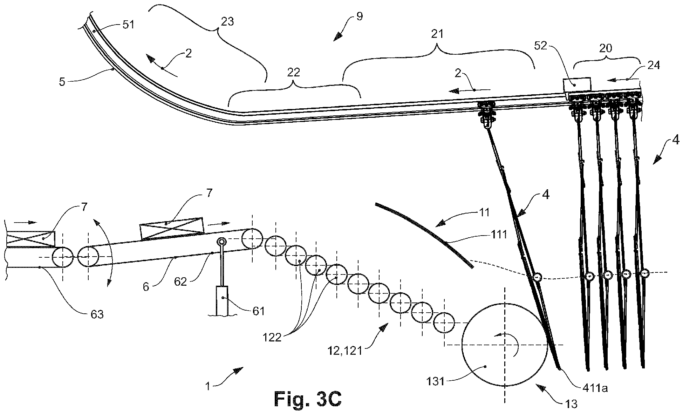

Sobald nun die Vorderwand 411 der Transporttasche 41 der Transporteinheit 4 mit der als frei drehende Rolle 131 realisierten Schwenkvorrichtung 13 anschlägt, beginnt der erste Abschnitt 21 des Förderpfads 2, entlang welchem die Transporttasche der Transporteinheit von der senkrechten Transportposition in eine geschwenkte Position gebracht wird (vgl. Figur 3C mit der Transporttasche in einer Zwischenposition).

Die Lagerpunkte 413 der Transporttasche 41 der Transporteinheit 4 folgen dabei dem als gestrichelte Linie dargestellten Pfad. Diese Linie schneidet sich schliesslich mit der ersten Stützvorrichtung 11. Die erste Stützvorrichtung 11 weist zwei parallele Führungsschienen 111 auf, welche zu beiden Seiten der Förderschiene 51 angeordnet sind. Kommen nun die Lagerpunkte 413 in Kontakt mit den genannten Führungsschienen 111 der ersten Stützvorrichtung 11, so wird die Rückwand 412 an drei Auflagepunkten gestützt, nämlich den beiden Lagerpunkten 413, welche auf den Führungsschienen 111 der ersten Stützvorrichtung 11 aufliegen, und dem Haken 418, welcher im Tragehaken des Laufwagens 43 aufliegt. Es beginnt der zweite Abschnitt 22 des Förderpfads, in welchem die Rückwand 412 der Transporttasche der Transporteinheit durch die erste Stützvorrichtung 11 gestützt wird.

Während der weiteren Förderung des Laufwagens 43 in Förderrichtung 24 wird nun die Ausrichtung und Bewegung der Rückwand 412 der Transporttasche 41 durch die erste Stützvorrichtung 11 in Verbindung mit der Position des Laufwagens 43 auf der Laufschiene 51 definiert. Die Vorderwand 411 der Transporttasche gleitet zunächst weiterhin über die Rolle 131 der Schwenkvorrichtung 13 bis schliesslich nur noch die untere Kante 411a der Vorderwand 411 auf der Rolle 131 aufliegt. Während der weiteren Förderung öffnet sich nun durch das Eigengewicht der Vorderwand 411 die Transporttasche 41. Da die untere Kante 411a der Vorderwand jedoch weiterhin durch die Rolle 131 gestützt wird, verläuft dieser Vorgang stetig und kontrolliert, bis schliesslich auch die untere Kante 411a den Kontakt zur Rolle verliert, und der erste Abschnitt 21 des Förderpfads endet.

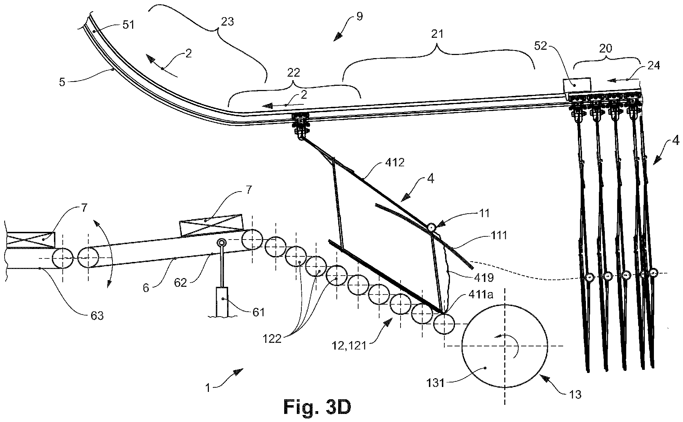

Die Transporttasche öffnet sich nun weiter, bis die Vorderwand 411, zu Beginn gegebenenfalls erst die untere Kante 411a der Vorderwand 411, auf der zweiten Stützvorrichtung 12 aufliegt. Es beginnt der dritte Abschnitt 23 des Förderpfads 2 (vgl. Figur 3D).

Die zweite Stützvorrichtung 12, die als eine Rolleneinrichtung 121 ausgeführt ist, setzt sich aus einer Anordnung von Rollen 122 zusammen, die in direktem Kontakt mit der Vorderwand 411 der Transporttasche 41 stehen und ein reibungsarmes Gleiten dieser der Vorderwand 411 ermöglichen. Der Einsatz von Rollen 122 zielt darauf ab, die Reibung zu reduzieren und somit den Verschleiss an der Vorderwand 411 der Transporttasche 41 zu minimieren.

Eine entsprechende Rollenvorrichtung ist auch in der Schweizer Patentanmeldung Nr. CH000981/2023 in den Figuren 1a, 1b, 2a-2f und 5a-5f offenbart.

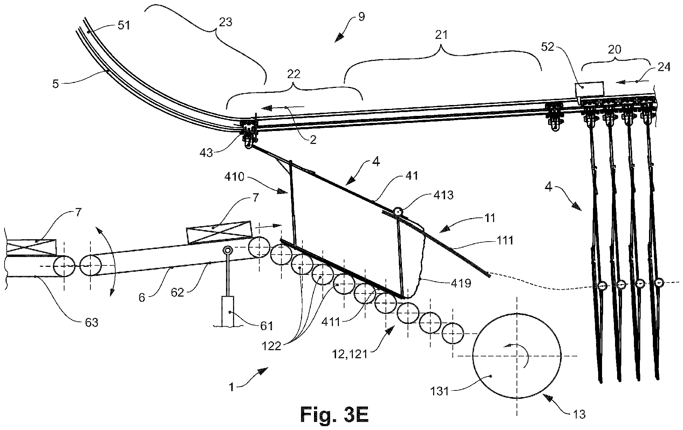

Während der weiteren Förderung der Transporteinheit entlang des Förderpfads 2 bleibt die Vorderwand 411 in Kontakt mit der zweiten Stützvorrichtung 12. Aus geometrischen Gründen ändert sich gleichzeitig die Ausrichtung der Rückwand 412, bis sie schliesslich in der Beladeposition (vgl. Figur 3E) parallel zur Rollenanordnung 121 der zweiten Stützvorrichtung 12 steht. Die Antriebsvorrichtung unterbricht nun die weitere Förderung der Transporteinheiten 4.

In dieser Beladeposition liegt nun die Vorderwand 411 der Transporttasche 41 flächig auf der Rollenanordnung auf. Die geometrische Anordnung der Förderschiene 51, der ersten Stützvorrichtung 11 und der zweiten Stützvorrichtung 12 ist dabei vorteilhaft so gewählt, dass die Transporttasche 41 weniger weit geöffnet ist als es in dieser Lage der Transporttasche aufgrund des Eigengewichts der Vorderwand 411 etc. ohne die zweite Stützvorrichtung 12 der Fall wäre. Es resultiert eine geometrisch klar definierte, reproduzierbare Öffnung 410 der Transporttasche 41.

Eine Übergabeeinheit 6 der Beladevorrichtung 1 ist dafür konzipiert, die zu übergebenden Stückgüter 7 in die Transporttasche 41 einzuführen. Über einen vorgelagerten Bandförderer 63 wird ein Stückgut 7 auf einen Bandförderer 62 der Übergabeeinheit 6 gefördert. Eine Positioniereinheit 61, welche in Form eines pneumatischen Zylinders realisiert ist, hält den Bandförderer 62 dabei wie dargestellt in einer oberen Position. Der Bandförderer 62 der Übergabeeinheit 6 fördert nun das Stückgut 7 durch die Öffnung 410 in den Innenraum der Transporttasche 41.

Eine entsprechende Übergabeeinheit ist auch in der Schweizer Patentanmeldung Nr. CH000981/2023 in den Figuren 1a, 1b, 2a-2f und 5a-5f offenbart.

Die Positioniereinheit 61 sorgt für die präzise Ausrichtung der Übergabeeinheit 6 während der Beladung, sodass sie exakt an der Öffnung der Transporttasche 41 ansetzt, was ein reibungsloses Einschleusen der Stückgüter 7 in die Transporttasche 41 erlaubt. Da die Position der Öffnung 410 der Transporttasche 41 in der Beladeposition definiert und festgelegt ist, kann dabei auf komplexe Detektionsmittel verzichtet werden.

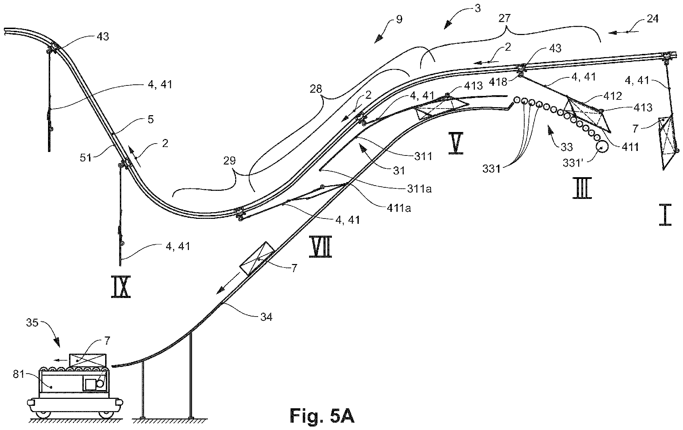

Weiter kann die Positioniereinheit 61 auch genutzt werden, um mehrere Lagen von Stückgütern in die Transporttasche einzubringen, wie in der Schweizer Patentanmeldung Nr. CH000981/2023 in den Figuren 2a-2f und 5a-5f offenbart.

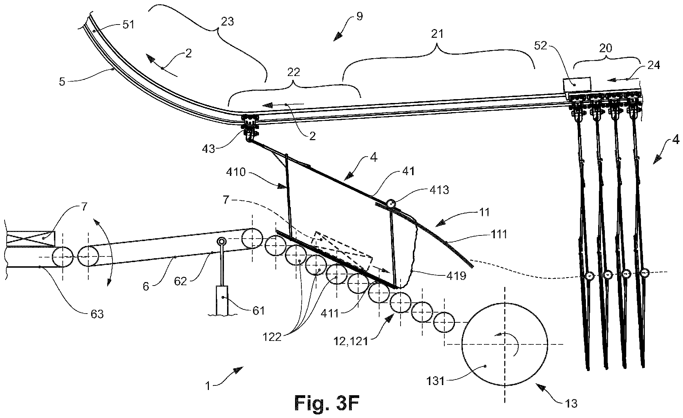

Das Stückgut 7 gleitet schliesslich nach der Übergabe an die Transporttasche 41 auf der Innenseite der Vorderwand 411 schwerkraftgetrieben weiter nach unten in Richtung des Taschenbodens 419 (vgl. Figur 3F).

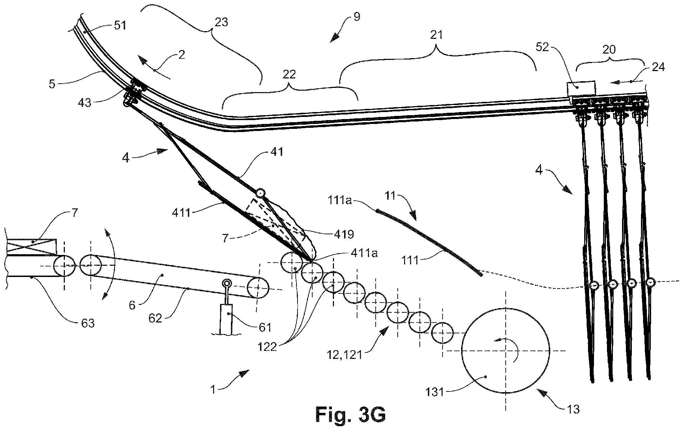

Nachdem die Transporttasche 41 der Transporteinheit 4 beladen ist, fördert die Antriebsvorrichtung die Transporttaschen in der Beladevorrichtung 1 weiter entlang des Förderpfads 2. Die Positioniereinheit 61 schwenkt den Bandförderer 62 nach unten, so dass er in dieser Phase nach der Beladung der Transporteinheit nicht im Weg steht. Während der weiteren Förderung der Transporteinheit 4 entlang des Förderpfads 2 wird die Vorderwand 411 der Transporttasche 41, insbesondere die untere Kante 411a der Vorderwand 411, zunächst weiterhin durch die zweite Stützvorrichtung 12 gestützt (vgl. Figur 3G). Die Lagerpunkte 413 der Rückwand 412 hingegen erreichen das Ende 111a der Führungsschienen 111 der ersten Stützvorrichtung 11. Die Lagerpunkte 413 werden durch die erste Stützvorrichtung 11 nicht mehr länger gestützt, und der zweite Abschnitt 22 des Förderpfads 2 endet damit. Durch das Eigengewicht schwenkt die Rückwand 412 um den Haken 418 nach unten, bis die Rückwand 412 auf dem Stückgut 7 in der Transporttasche 41 aufliegt. Die befüllte Transporttasche 41 ist nun wieder geschlossen und bereit für den Weitertransport (vgl. Figur 3G).

Wird die Transporteinheit 4 weiter gefördert, so hebt sie schliesslich von der zweiten Stützvorrichtung 12 ab und kehrt in die senkrecht hängende Transportposition zurück (nicht dargestellt). Das Ende des dritten Abschnitt 23 des Förderpfads ist erreicht.

In einer nicht dargestellten weiteren vorteilhaften Ausführungsform einer erfindungsgemässen Beladevorrichtung 1 ist die erste Stützvorrichtung verlängert realisiert. Die Führungsschienen der ersten Stützvorrichtung sind dabei angeordnet, dass eine Transporttasche, insbesondere deren Vorderwand, nicht mit Elementen der Beladevorrichtung, insbesondere dem Bandförderer der Übergabeeinheit, in Kontakt kommen kann. Dies schont das Material der Beladevorrichtung und der Transporteinheiten, und es muss weniger Freiraum eingeplant werden, was eine kompaktere Konfiguration der Vorrichtung ermöglicht. Weiter kann so auch ein Überschwingen der Transporttasche bei der Rückkehr in die senkrechte Beladeposition vermieden werden.

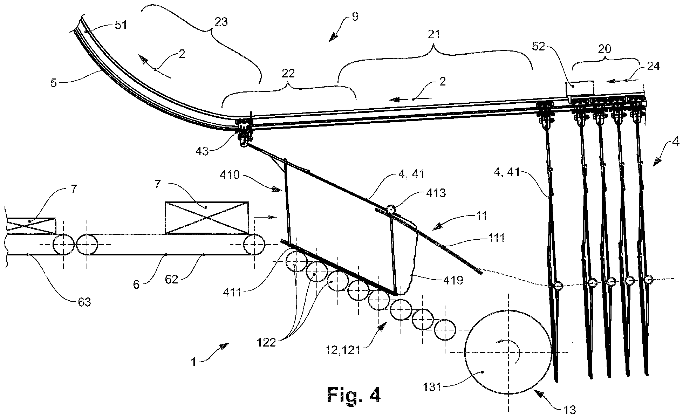

Figur 4 zeigt eine weitere Ausführungsform einer erfindungsgemässen Beladevorrichtung 1, mit einer fest montierten Übergabeeinheit 6. Diese Anordnung kommt ohne eine zusätzliche Positioniereinheit 61 zum Heben und Senken der Übergabeeinheit 6 aus.

Bei der Beladevorrichtung 1 in Figur 3A-3G wird nur eine Transporteinheit 4 gleichzeitig durch die Beladevorrichtung 1 gefördert. Um den Durchsatz zu erhöhen, können jedoch auch zwei oder mehr Transporteinheiten 4 gleichzeitig durch die Beladevorrichtung 1 gefördert werden, wobei sich diese in verschiedenen Phasen befinden. So kontaktiert beispielsweise in Figur 4 eine Transporttasche 41 einer ersten Transporteinheit 4 die Rolle 131 der Schwenkvorrichtung 13 (analog zu Figur 3B), während sich eine Transporttasche 41 einer zweiten Transporteinheit 4 sich bereits in der Beladeposition befindet (analog zu Figur 3E). Die Taktung kann gegenüber Figur 4 noch weiter verdichtet werden, wobei lediglich vermieden werden muss, dass sich hintereinander folgende Transporteinheiten gegenseitig so beeinflussen, dass der Ablauf der Beladung gestört wird.

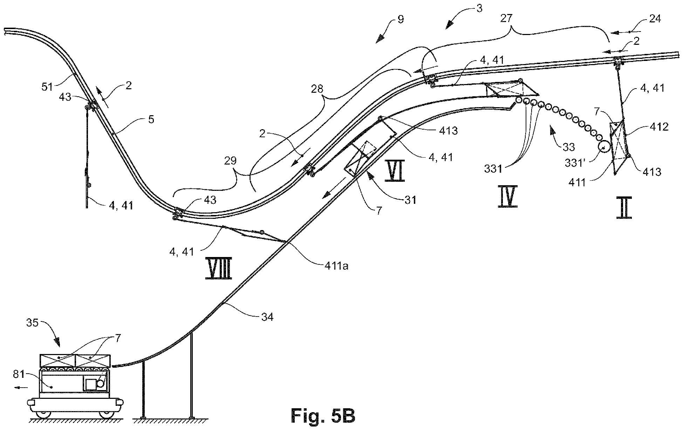

Figuren 5A und 5B zeigen eine schematische Seitenansicht einer erfindungsgemässen Entladevorrichtung 3 in verschiedenen Phasen I bis IX des Entladevorgangs.

Die Entladevorrichtung 3 dient zum Entladen einer mit einem Stückgut 7 beladenen Transporttasche 41 einer zugeförderten Transporteinheit 4. Die Transporttasche 41 ist dabei hängend an einem Tragelement 43 in Form eines Laufwagens gelagert. Die Transporteinheit 4 entspricht im Wesentlichen derjenigen Transporteinheit 4 wie sie in den Figuren 1A, 1B diskutiert worden ist. Die Lagerpunkte 413 sind hingegen als Rollen ausgestaltet. Der Laufwagen 43 ist rollend verschiebbar in der Förderschiene 51 der Hängefördervorrichtung 5 gelagert.

In der Hängefördervorrichtung 5 der Entladevorrichtung 3 werden die Transporteinheiten vorzugsweise aktiv durch eine Antriebseinheit (nicht dargestellt) gefördert. Die Antriebsvorrichtung kann zum Beispiel als umlaufende Antriebskette ausgestaltet sein, welche reversibel an einen Mitnehmerbolzen des Laufwagens 43 einer Transporteinheit ankoppelt.

Die Entladevorrichtung 3 weist eine Schwenkvorrichtung 33 auf, welche die Transporttasche 41 in einem ersten Abschnitt 27 der Förderpfads aus einer senkrechten, ersten Orientierung (vgl. Transporteinheit 4 in Phasen I, II) in eine zweite Orientierung (vgl. Transporteinheit 4 in Phasen III, IV) schwenken soll. Die dargestellte Schwenkvorrichtung 33 ist als Rollenvorrichtung mit einer Mehrzahl von Rollen 331', 331 ausgeführt. Der erste Abschnitt 27 des Förderpfades beginnt, wenn die Vorderwand 411 der Transporttasche 41 einer Transporteinheit die erste Rolle 331' kontaktiert (vgl. Transporteinheit 4 in Phase I). Das Schwenken erfolgt dann im ersten Abschnitt 27 des Förderpfads 2. Die Rollen 331', 331 reduzieren dabei die Reibung zwischen der Transporttasche 41, insbesondere deren Vorderwand 411, und der Schwenkvorrichtung 33.

Alternativ könnte die Schwenkvorrichtung auch als Rampe ausgestaltet sein, auf welcher die Vorderwand 411 der Transporttasche 41 gleitet. Weiter kann die Schwenkvorrichtung auch als Anschlag oder Leitblech oder Hürde ausgestaltet sein, oder als ein anderes passives Hindernis, welche durch Wechselwirkung mit der Vorderwand 411 der Transporttasche 41 geometrisch ein Schwenken der Transporttasche in die zweite Orientierung verursacht.

Bei der weiteren Förderung entlang des Förderpfads 2 erreicht schliesslich die Transporteinheit 4 eine erste Stützvorrichtung 31 (vgl. Transporteinheit 4 in Phasen IV, V, VI).

Die erste Stützvorrichtung 31 weist zwei parallele Führungsschienen 311 auf, welche zu beiden Seiten der Förderschiene 51 angeordnet sind. Kommen nun die Lagerpunkte 413 der Rückwand 412 der Transporttasche 41 in Kontakt mit den genannten Führungsschienen 311 der ersten Stützvorrichtung 31, so wird die Rückwand 412 an drei Auflagepunkten gestützt, nämlich den beiden Lagerpunkten 413, welche auf der ersten Stützvorrichtung 31 aufliegen, und dem Haken 418 der Rückwand, welcher im Tragehaken des Laufwagens 43 aufliegt. Es beginnt der zweite Abschnitt 28 des Förderpfads 2, in welchem die Rückwand 412 der Transporttasche 41 der Transporteinheit 4 durch die erste Stützvorrichtung 31 gestützt wird.

Zu beachten ist, dass die erste Stützvorrichtung 31 so ausgestaltet sein muss, dass die Entladevorrichtung 3 mit Transporteinheiten 4 mit unterschiedlich gefüllten Transporttaschen 41 beschickt werden kann. Eine Entladevorrichtung 3 muss sowohl Transporttaschen entladen können, die mit einem Stückgut 7 der maximal möglichen Dicke belegt sind, als auch leere Transporttaschen 41, die aus einem unbestimmten Grund zugefördert werden, ohne dass es zu Störungen kommen kann. In der dargestellten Entladevorrichtung 3 ist deshalb die erste Stützvorrichtung 31 so weit nach hinten zur Schwenkvorrichtung 33 verlängert, dass auch leere Transporttaschen problemlos an die erste Stützvorrichtung 31 übergeben werden können (nämlich in Phase IV). Bei maximal befüllten Transporttaschen hingegen liegen die Lagerpunkte 413 der Transporttasche 41 spätestens bei Phase VI auf der ersten Stützvorrichtung 31 auf, womit dann ebenfalls der zweite Abschnitt 28 des Förderpfads beginnt.

In Normalfall jedoch fällt die mehr oder weniger voluminös befüllte Transporttasche 41 einer Transporteinheit 4 mit Ihrer Vorderwand 411 auf die Entladerutsche 34, nachdem zuvor die Vorderwand 411 das Ende der Schwenkvorrichtung 33 erreicht hat (nach Phase IV). Damit endet der erste Abschnitts 27 des Förderpfads 2.

Während der weiteren Förderung des Laufwagens 43 in Förderrichtung 24 steigt nun kontinuierlich der Abstand zwischen der Entladerutsche 34, auf welcher die Vorderwand gleitet (vgl. Phase V), und den Führungsschienen 311 der ersten Stützvorrichtung 31, bis schliesslich die Lagerpunkte 413 der Rückwand auf den Führungsschienen 311 aufliegen und somit die Rückwand 412 durch die erste Stützvorrichtung 31 gestützt werden. Der Beginn dieses zweiten Abschnitts 28 des Förderpfads ist somit abhängig von der Dicke der beladenen Transporttasche 41.

Da der Abstand zwischen Entladerutsche 34 und erster Stützvorrichtung 31 weiter zunimmt, öffnet sich nun die Transporttasche 43 aufgrund des Eigengewichts der Vorderwand und dem Stückgut 7, während die Vorderwand 411 weiterhin auf der Entladerutsche gleitet.

Die Entleerung der Transporttasche 41 beginnt, wenn die Rückwand 412 der Transporttasche 41 eine negative Steigung erreicht (vgl. Phasen V, VI), sodass die Schwerkraft beginnt, auf das Stückgut 7 derart zu wirken, dass diese aus der Transporttasche 41 herausgleiten kann. Hier beginnt der dritte Abschnitt 29 des Förderpfades 2, wobei sich der zweite Abschnitt 28 mit dem dritten Abschnitt 29 des Förderpfades 2 überschneiden.

Sobald sich die Transporteinheit 4 sowohl im dritten Abschnitt 29 des Förderpfades 2 befindet und die Vorderwand 411 der Transporttasche 41 eine negative Steigung aufweist, also ein Gefälle in Richtung der Öffnung 410 der Transporttasche 41, als auch im zweiten Abschnitt 28 des Förderpfades 2, in welchem die Transporttasche geöffnet ist, kann die Ware 7 in der Transporttasche schwerkraftgetrieben auf der Innenseite der Vorderwand 411 der Transporttasche 41 zur Öffnung 410 hin gleiten, und dann auf die Entladerutsche 34 (vgl. Phase VI). Auf der Entladerutsche 34 gleitet das Stückgut 7 dann schwerkraftgetrieben weiter in Richtung eines Zielbereichs 35.

Schliesslich wird eine der aktuellen Ausrichtung der Rückwand entsprechende maximale Öffnung der Transporttasche erreicht, und die Vorderwand der Transporttasche wird von der Entladerutsche 34 abgehoben (vgl. Phase VI).

Am Ende gelangt das entnommene Stückgut 7 in einen Zielbereich 35 zur weiteren Verarbeitung. Im gezeigten Ausführungsbeispiel befindet sich im Zielbereich ein führerloses Transportfahrzeug 81 (AGV, automated guided vehicle), welches das Stückgut 7 übernimmt und selbstständig zu einem vorgegebenen Ziel transportieren kann.

Schliesslich erreichen die Lagerpunkte 413 das Ende 311a der Führungsschienen 311, und die Rückwand 412 der Transporttasche 41 wird nicht länger gestützt. Der zweite Abschnitt 28 des Förderpfads 2 ist beendet. Die nun leere Transporttasche 41 fällt auf die Entladerutsche 34, und die untere Kante 411a der Vorderwand 411 gleitet bei der weiteren Förderung der Transporteinheit 4 auf der Entladerutsche 34 (vgl. Phasen VII, VIII).

Sobald die Rückwand 412 der Transporttasche 41 keine negative Steigung mehr aufweist, endet im Prinzip auch der dritte Abschnitt 29 des Förderpfads 2, wobei dies für die bereits entleerte Transporttasche zu diesem Zeitpunkt dann bereits keine Rolle mehr spielt.

Schlussendlich hebt die Transporttasche 41 der Transporteinheit 4 von der Entladerutsche 34 ab und schwenkt zurück in die senkrechte Transportstellung (vgl. Phase IX).

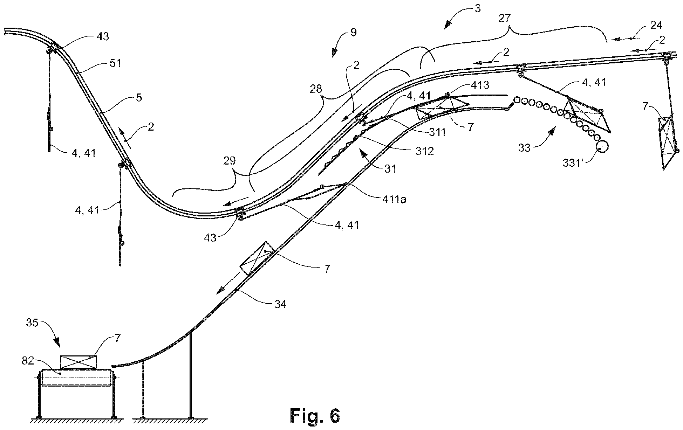

Figur 6 zeigt eine alternative Ausführungsform einer solchen erfindungsgemässen Entladevorrichtung 3, bei welcher im Zielbereich 35 ein Liegeförderer 82 in Form eines Bandförderers vorgesehen ist, welcher die entladenen Stückgüter 7 übernimmt und zur weiteren Verarbeitung weiter fördert.

In Figur 6 ist ein zusätzliches Vibrationsmittel 312 vorgesehen, das zur Unterstützung der Entleerung der Transporttasche dient. Dieses Vibrationsmittel ist im gezeigten Beispiel als gezahnter Abschnitt 312 am Ende der Führungsschienen 311 der ersten Stützvorrichtung ausgeführt. Wenn die Lagerpunkte 413 der Transporttasche 41 über diesen Bereich gleiten oder rollen, wird die Transporttasche in Vibrationen versetzt. Das Stückgut 7 kann so aus der Transporttasche 41 herausgerüttelt werden.

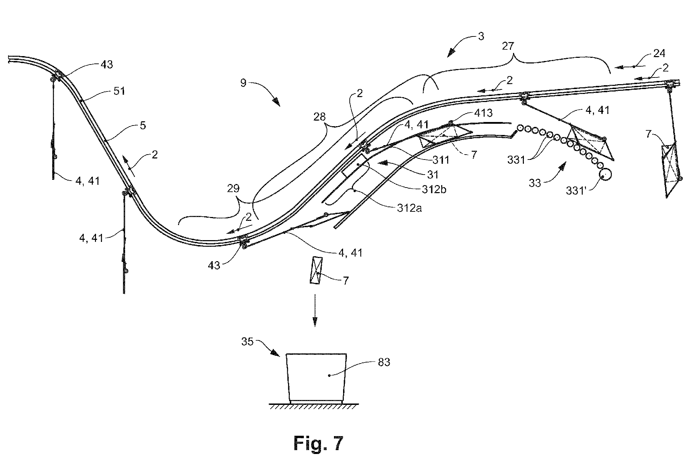

Alternativ kann das Vibrationsmittel auch als aktiver Schüttel-Aktuator 312b ausgestaltet sein. Beispielsweise kann ein Aktuator in Form einer Rüttlereinheit einen bestimmten Abschnitt 312a der Führungsschiene 311 rütteln, wie in Figur 7 gezeigt, um so ein Stückgut 7 aus der Transporttasche 41 herauszurütteln. Ein solcher Rüttler 312b kann beispielsweise gezielt dann aktiviert werden, wenn die Transporteinheit eine Lichtschranke (nicht dargestellt) passiert. Dies reduziert die Komplexität der Steuerung des Aktuators 312b.

In der Ausführungsvariante der erfindungsgemässen Entladevorrichtung 3 in Figur 7 endet zudem die Entladerutsche 34 oberhalb des Zielbereichs 35, so dass die entladenen Stückgüter 7 in einen Auffangbehälter 83 im Zielbereich 35 fallen.

Alternativ kann auch die Transporttasche 41 selbst direkt durch einen aktiven Aktuator gerüttelt oder geschüttelt werden.

Die vorliegende Erfindung ist in ihrem Umfang nicht auf die hier beschriebenen spezifischen Ausführungsformen beschränkt. Vielmehr ergeben sich für den Fachmann aus der Beschreibung und den dazugehörigen Figuren zusätzlich zu den hier offenbarten Beispielen verschiedene weitere Modifikationen der vorliegenden Erfindung, die ebenfalls in den Schutzbereich der Ansprüche fallen. Zusätzlich werden in der Beschreibung verschiedene Referenzen zitiert, deren Offenbarungsgehalt hiermit in deren Gesamtheit durch Referenz in die Beschreibung mit aufgenommen wird.

## Patentansprüche

1. Beladevorrichtung (1) zum Beladen von Transporteinheiten in einer Hängefördervorrichtung, umfassend:
eine Hängefördervorrichtung (5) mit mindestens einer Transporteinheit (4) mit einem Tragelement (43) und einer am Tragelement schwenkbar hängend gelagerten Transporttasche (41), wobei die Hängefördervorrichtung (5) dazu ausgelegt ist, die mindestens eine Transporteinheit entlang eines Förderpfades (2) in einer Förderrichtung (24) zu fördern, wobei die Transporttasche (41) der mindestens einen Transporteinheit (4) eine Rückwand (412) aufweist, welche am Tragelement (43) der Transporteinheit (4) schwenkbar hängend gelagert ist, und wobei die genannte Rückwand (412) zwei Lagerpunkte (413) aufweist, die je auf einer Seite der Rückwand (412) seitlich hervorstehend angeordnet sind, sowie eine mit der Rückwand beweglich verbundene Vorderwand (411), welche in der Förderrichtung (24) der Rückwand (412) vorausläuft;
eine Schwenkvorrichtung (13), welche eingerichtet ist, mit der Vorderwand (411) der Transporttasche (41) einer entlang des Förderpfads der Hängefördervorrichtung (5) geförderten Transporteinheit (4) zu wechselwirken, um die Transporttasche (41) während der Förderung entlang eines ersten Abschnitts (21) des Förderpfads von einer senkrechten ersten Orientierung in eine gegenüber der Senkrechten geschwenkte zweite Orientierung zu schwenken;
eine erste Stützvorrichtung (11), welche eingerichtet ist, eine in die zweite Orientierung geschwenkte Transporttasche (41) während der Förderung entlang eines zweiten Abschnitts (22) des Förderpfades (2) mittels den zwei Lagerpunkten (413) der Rückwand (412) der Transporttasche zu stützen; und
eine zweite Stützvorrichtung (12), welche eingerichtet ist, die Vorderwand (411) der Transporttasche (41) während der Förderung entlang eines dritten Abschnitts (23) des Förderpfades (2) zu stützen;
wobei die erste Stützvorrichtung (11) und die zweite Stützvorrichtung (12) derart ausgestaltet sind, dass in demjenigen Bereich, in welchem der zweite Abschnitt (22) und der dritte Abschnitt (23) des Förderpfades (2) überlappen, die Transporttasche (41) eine festgelegte, geometrisch definierte Öffnung aufweist.

2. Beladevorrichtung (1) nach Anspruch 1, wobei in demjenigen Bereich, in welchem der zweite Abschnitt (22) und der dritte Abschnitt (23) des Förderpfades (2) überlappen, die erste Stützvorrichtung (11) und die zweite Stützvorrichtung (12) parallel zueinander verlaufen.

3. Beladevorrichtung (1) nach Anspruch 1 oder 2, wobei der dritte Abschnitt (23) des Förderpfades (2) stromabwärts auf den ersten Abschnitt (21) des Förderpfades (2) folgt und nicht mit dem ersten Abschnitt (21) überlappt.

4. Beladevorrichtung (1) nach einem der vorangegangenen Ansprüche, wobei die Schwenkvorrichtung (13) als passive, insbesondere als nicht aktiv angetriebene Einrichtung ausgestaltet ist, welche die Vorderwand (411) der Transporttasche (41) der Transporteinheit (4) beim Fördern der Transporteinheit (4) im ersten Abschnitt (21) des Förderpfades (2) kontaktiert.

5. Beladevorrichtung (1) nach einem der vorangegangenen Ansprüche, wobei die Schwenkvorrichtung (13) eine Rampe, einen Anschlag, eine Hürde und/oder mindestens eine waagrechte, quer zum Förderpfad angeordnete Rolle (131) aufweist.

6. Beladevorrichtung (1) nach einem der vorangegangenen Ansprüche, wobei die zwei Lagerpunkte (413) in einem unteren Bereich der Rückwand (412) der Transporttasche (41) angeordnet sind.

7. Beladevorrichtung (1) nach einem der vorangegangenen Ansprüche, wobei die erste Stützvorrichtung (11) zwei parallele Führungsschienen (111) aufweist, welche so ausgestaltet sind, dass die zwei seitlich hervorstehenden Lagerpunkte (413) der Rückwand (412) beim Fördern der Transporteinheit (4) im zweiten Abschnitt (22) des Förderpfades (2) auf je einer der beiden Führungsschienen (111) aufliegen.

8. Beladevorrichtung (1) nach Anspruch 7, wobei die beiden Führungsschienen (111) auf der jeweils von der Transporttasche (41) abgewandten Seite eine seitliche Begrenzung, beispielsweise ein Leitblech, aufweisen.

9. Beladevorrichtung (1) nach einem der vorangegangenen Ansprüche, wobei die zweite Stützvorrichtung (12) eine Rolleneinrichtung (121) aufweist, mit einer Mehrzahl von quer zum Förderpfad (2) angeordneten Rollern (122).

10. Beladevorrichtung (1) nach einem der vorangegangenen Ansprüche, wobei die Beladevorrichtung (1) eine Übergabeeinheit (6) aufweist, welche dazu eingerichtet ist, ein Stückgut (7) in die Transporttasche (41) zu fördern, wenn sich die Transporttasche (41) im dritten Abschnitt (23) des Förderpfades (2) befindet.

11. Beladevorrichtung (1) nach einem der vorangegangenen Ansprüche, wobei die Vorderwand (411) und die Rückwand (412) der Transporttasche (41) parallel zueinanderstehen und durch Distanzelemente (414) schwenkbeweglich verbunden sind, so dass die Vorderwand (411) und die Rückwand (412) und die Distanzelemente zusammen ein Parallelepiped bilden.

12. Entladevorrichtung (3) zum Entladen von mit Stückgütern (7) beladenen Transporteinheiten in einer Hängefördervorrichtung, umfassend:
eine Hängefördervorrichtung (5) mit mindestens einer Transporteinheit (4) mit einem Tragelement (43) und einer am Tragelement (43) schwenkbar hängend gelagerten Transporttasche (41), wobei die Hängefördervorrichtung (5) dazu ausgelegt ist, die mindestens eine Transporteinheit (4) entlang eines Förderpfades (2) in einer Förderrichtung (24) zu fördern, wobei die Transporttasche (41) der mindestens einen Transporteinheit (4) eine Rückwand (412) aufweist, welche am Tragelement (43) der Transporteinheit (4) schwenkbar hängend gelagert ist, und wobei die genannte Rückwand (412) zwei Lagerpunkte (413) aufweist, die je auf einer Seite der Rückwand (412) seitlich hervorstehend angeordnet sind, sowie eine mit der Rückwand (412) beweglich verbundene Vorderwand (411), welche in Förderrichtung (24) der Rückwand (412) vorausläuft;
eine Schwenkvorrichtung (33), welche eingerichtet ist, mit der Vorderwand (411) der Transporttasche (41) einer entlang des Förderpfades (2) der Hängefördervorrichtung (5) geförderten Transporteinheit (4) zu wechselwirken, um die Transporttasche (41) während der Förderung entlang eines ersten Abschnitts (27) des Förderpfades (2) von einer senkrechten ersten Orientierung in eine gegenüber der Senkrechten geschwenkte zweite Orientierung zu schwenken; und
eine erste Stützvorrichtung (31), welche eingerichtet ist, eine in die zweite Orientierung geschwenkte Transporttasche (41) während der Förderung entlang eines zweiten Abschnitts (28) des Förderpfades (2) mittels den zwei Lagerpunkten (413) der Rückwand der Transporttasche (41) zu stützen;
wobei die Hängefördervorrichtung (5) und die erste Stützvorrichtung (31) so ausgestaltet sind, dass in einem dritten Abschnitt (29) des Förderpfades (2), die Rückwand (412) der Transporteinheit (4) in Förderrichtung (24) so weit nach hinten geschwenkt ist, dass die Rückwand (412) eine negative Steigung aufweist.

13. Entladevorrichtung (3) nach Anspruch 12, wobei die Entladevorrichtung (3) eine Entladerutsche (34) umfasst, welche dazu eingerichtet ist, in dem dritten Abschnitt des Förderpfades (2) aus der Transporttasche (41) der Transporteinheit (4) gleitende Stückgüter (7) zu übernehmen, so dass die übernommenen Stückgüter (7) auf der Entladerutsche (34) schwerkraftgetrieben zu einem Zielbereich (35) gleiten können.

14. Entladevorrichtung (3) nach Anspruch 12 oder 13, wobei die Schwenkvorrichtung (33) als passive, insbesondere als nicht aktiv angetriebene Einrichtung ausgestaltet ist, welche die Vorderwand (411) der Transporttasche (41) der Transporteinheit (4) beim Fördern der Transporteinheit im ersten Abschnitt (27) kontaktiert.

15. Entladevorrichtung (3) nach einem der Ansprüche 12 bis 14, wobei die Schwenkvorrichtung (33) eine Rampe, einen Anschlag, eine Hürde und/oder mindestens eine waagrechte, quer zum Förderpfad (2) angeordnete Rolle (331) aufweist.

16. Entladevorrichtung (3) nach einem der Ansprüche 12 bis 15, wobei die zwei Lagerpunkte (413) in einem unteren Bereich der Rückwand (412) der Transporttasche (41) angeordnet sind.

17. Entladevorrichtung (3) nach einem der Ansprüche 12 bis 16, wobei die erste Stützvorrichtung (31) zwei parallele Führungsschienen (311) aufweist, welche so ausgestaltet sind, dass die zwei seitlich hervorstehenden Lagerpunkte (413) der Rückwand beim Fördern der Transporteinheit (4) im zweiten Abschnitt (28) auf je einer der beiden Führungsschienen (311) aufliegen.

18. Entladevorrichtung (3) nach Anspruch 17, wobei die beiden Führungsschienen (311) auf der jeweils von der Transporttasche (41) abgewandten Seite eine seitliche Begrenzung, beispielsweise ein Leitblech, aufweisen.

19. Entladevorrichtung (3) nach einem der Ansprüche 12 bis 18, wobei die erste Stützvorrichtung (31) ein Vibrationsmittel (312) aufweist.

20. Entladevorrichtung (3) nach einem der Ansprüche 12 bis 19, wobei die Vorderwand (411) und die Rückwand (412) der Transporttasche (41) parallel zueinanderstehen und durch Distanzelemente (414) schwenkbeweglich verbunden sind, so dass die Vorderwand (411) und die Rückwand (412) und die Distanzelemente (414) zusammen ein Parallelepiped bilden.

21. Hängeförderanlage (9) mit mindestens einer Beladevorrichtung (1) nach einem der Ansprüche 1 bis 11 und/oder mindestens einer Entladevorrichtung (3) nach einem der Ansprüche 12 bis 20.

## Claims

1. A loading device (1) for loading transport units in an overhead conveyor device, comprising:
an overhead conveyor device (5) having at least one transport unit (4) with a carrier element (43) and a transport pouch (41) mounted on the carrier element in a pivotably suspended manner, wherein the overhead conveyor device (5) is designed to convey the at least one transport unit along a conveying path (2) in a conveying direction (24), wherein the transport pouch (41) of the at least one transport unit (4) comprises a rear wall (412) that is mounted on the carrier element (43) of the transport unit (4) in a pivotably suspended manner, and wherein the said rear wall (412) has two bearing points (413) that are each arranged projecting laterally on one side of the rear wall (412), and a front wall (411) that is movably connected to the rear wall and runs ahead of the rear wall (412) in the conveying direction (24);
a pivoting device (13) that is configured to interact with the front wall (411) of a transport pouch (41) of a transport unit (4) conveyed along the conveying path of the overhead conveyor device (5), in order to pivot the transport pouch (41) during conveying along a first section (21) of the conveying path from a vertical first orientation to a second orientation pivoted with respect to the vertical;
a first supporting device (11) that is configured to support a transport pouch (41) pivoted into the second orientation during conveying along a second section (22) of the conveying path (2) by means of the two bearing points (413) of the rear wall (412) of the transport pouch; and
a second supporting device (12) that is configured to support the front wall (411) of a transport pouch (41) during conveying along a third section (23) of the conveying path (2);
wherein the first supporting device (11) and the second supporting device (12) are configured in such a manner that in a region in which the second section (22) and the third section (23) of the conveying path (2) overlap, the transport pouch (41) has a determined, geometrically defined opening.

2. The loading device (1) according to claim 1, wherein in the region in which the second section (22) and the third section (23) of the conveying path (2) overlap, the first supporting device (11) and the second supporting device (12) run parallel to each other.

3. The loading device (1) according to claim 1 or 2, wherein the third section (23) of the conveying path (2) follows downstream after the first section (21) of the conveying path (2) and does not overlap with the first section (21).

4. The loading device (1) according to one of the preceding claims, wherein the pivoting device (13) is configured as a passive device, in particular as a non-actively driven device, which contacts the front wall (411) of a transport pouch (41) of a transport unit (4) during conveying of the transport unit (4) in the first section (21) of the conveying path (2).

5. The loading device (1) according to one of the preceding claims, wherein the pivoting device (13) comprises a ramp, a stop, a barrier, and/or at least one horizontal roller (131) arranged transverse to the conveying path.

6. The loading device (1) according to one of the preceding claims, wherein the two bearing points (413) are arranged in a lower region of the rear wall (412) of the transport pouch (41).

7. The loading device (1) according to one of the preceding claims, wherein the first supporting device (11) has two parallel guide rails (111) that are configured in such a manner that each of the two laterally projecting bearing points (413) of the rear wall (412) rest on one of the two guide rails (111) during the conveying of the transport unit (4) in the second section (22) of the conveying path (2).

8. The loading device (1) according to claim 7, wherein the two guide rails (111) each have a lateral boundary on the side facing away from the transport pouch (41), for example a guide plate.

9. The loading device (1) according to one of the preceding claims, wherein the second supporting device (12) has a roller device (121) with a plurality of rollers (122) arranged transverse to the conveying path (2).

10. The loading device (1) according to one of the preceding claims, wherein the loading device (1) has a transfer unit (6) that is configured to convey a piece goods item (7) into a transport pouch (41) when the transport pouch (41) is located in the third section (23) of the conveying path (2).

11. The loading device (1) according to one of the preceding claims, wherein the front wall (411) and the rear wall (412) of the transport pouch (41) are oriented parallel to each other and are pivotably connected by spacer elements (414) so that the front wall (411) and the rear wall (412) and the spacer elements together form a parallelepiped.

12. An unloading device (3) for unloading transport units loaded with piece goods (7) in an overhead conveyor device, comprising:
an overhead conveyor device (5) having at least one transport unit (4) with a carrier element (43) and a transport pouch (41) mounted on the carrier element in a pivotably suspended manner, wherein the overhead conveyor device (5) is designed to convey the at least one transport unit (4) along a conveying path (2) in a conveying direction (24), wherein the transport pouch (41) of the at least one transport unit (4) has a rear wall (412) that is mounted on the carrier element (43) of the transport unit (4) in a pivotably suspended manner, and wherein the said rear wall (412) has two bearing points (413) that are each arranged projecting laterally on one side of the rear wall (412), and a front wall (411) that is movably connected to the rear wall (412) and runs ahead of the rear wall (412) in the conveying direction (24);
a pivoting device (33) that is configured to interact with the front wall (411) of a transport pouch (41) of a transport unit (4) conveyed along the conveying path (2) of the overhead conveyor device (5) in order to pivot the transport pouch (41) during conveying along a first section (27) of the conveying path (2) from a vertical first orientation to a second orientation pivoted with respect to the vertical; and
a first supporting device (31) that is configured to support a transport pouch (41) pivoted into the second orientation during conveying along a second section (28) of the conveying path (2) by means of the two bearing points (413) of the rear wall of the transport pouch (41);
wherein the overhead conveyor device (5) and the first supporting device (31) are configured in such a manner that in a third section (29) of the conveying path (2), the rear wall (412) of the transport unit (4) is pivoted so far backwards in the conveying direction (24) that the rear wall (412) has a negative slope.

13. The unloading device (3) according to claim 12, wherein the unloading device (3) comprises an unloading chute (34) that is configured to receive piece goods (7) sliding out of a transport pouch (41) of the transport unit (4) in the third section of the conveying path (2) so that the received piece goods (7) can slide on the unloading chute (34) driven by gravity to a destination zone (35).

14. The unloading device (3) according to claim 12 or 13, wherein the pivoting device (33) is configured as a passive device, in particular as a non-actively driven device, which contacts the front wall (411) of the transport pouch (41) of the transport unit (4) during the conveying of the transport unit in the first section (27).

15. The unloading device (3) according to one of claims 12 to 14, wherein the pivoting device (33) comprises a ramp, a stop, a barrier, and/or at least one horizontal roller (331) arranged transverse to the conveying path (2).

16. The unloading device (3) according to one of claims 12 to 15, wherein the two bearing points (413) are arranged in a lower region of the rear wall (412) of the transport pouch (41).

17. The unloading device (3) according to one of claims 12 to 16, wherein the first supporting device (31) has two parallel guide rails (311) that are configured such that the two laterally protruding bearing points (413) of the rear wall each rest on one of the two guide rails (311) during the conveying of the transport unit (4) in the second section (28) of the conveying path (2).

18. The unloading device (3) according to claim 17, wherein the two guide rails (311) each have a lateral boundary on the side facing away from the transport pouch (41), for example a guide plate.

19. The unloading device (3) according to one of claims 12 to 18, wherein the first supporting device (31) has a vibrating means (312).

20. The unloading device (3) according to one of claims 12 to 19, wherein the front wall (411) and the rear wall (412) of the transport pouch (41) are oriented parallel to each other and are pivotably connected by spacer elements (414) so that the front wall (411) and the rear wall (412) and the spacer elements (414) together form a parallelepiped.

21. An overhead conveyor installation (9) with at least one loading device (1) according to one of claims 1 to 11, and/or at least one unloading device (3) according to one of claims 12 to 20.

## Revendications

1. Dispositif de chargement (1) pour charger des unités de transport dans un dispositif convoyeur suspendu, comprenant :
un dispositif convoyeur suspendu (5) comprenant au moins une unité de transport (4) dotée d'un élément porteur (43) et d'une poche de transport (41) suspendue de manière pivotante à l'élément porteur, le dispositif convoyeur suspendu (5) étant conçu pour transporter l'au moins une unité de transport le long d'un trajet de transport (2) dans une direction de transport (24), la poche de transport (41) de l'au moins une unité de transport (4) comprenant une paroi arrière (412) qui est montée de manière pivotante sur l'élément porteur (43) de l'unité de transport (4), et ladite paroi arrière (412) comprenant deux points d'appui (413) qui sont disposés en saillie latérale de part et d'autre de la paroi arrière (412), ainsi qu'une paroi avant (411) reliée de manière mobile à la paroi arrière, laquelle précède la paroi arrière (412) dans la direction de transport (24) ;
un dispositif de pivotement (13) configuré pour interagir avec la paroi avant (411) de la poche de transport (41) d'une unité de transport (4) transportée le long du trajet de transport du dispositif convoyeur suspendu (5) afin de faire pivoter la poche de transport (41), pendant le transport le long d'une première section (21) du trajet de transport, d'une première orientation verticale vers une seconde orientation pivotée par rapport à la verticale ;
un premier dispositif de support (11) configuré pour supporter une poche de transport (41) pivotée dans la seconde orientation pendant le transport le long d'une deuxième section (22) du trajet de transport (2), au moyen des deux points d'appui (413) de la paroi arrière (412) de la poche de transport ; et
un second dispositif de support (12) configuré pour supporter la paroi avant (411) de la poche de transport (41) pendant le transport le long d'une troisième section (23) du trajet de transport (2) ;
dans lequel le premier dispositif de support (11) et le second dispositif de support (12) sont conçus de sorte que, dans cette zone où la deuxième section (22) et la troisième section (23) du trajet de transport (2) se chevauchent, la poche de transport (41) comprend une ouverture fixe, géométriquement définie.

2. Dispositif de chargement (1) selon la revendication 1, dans lequel, dans cette zone où la deuxième section (22) et la troisième section (23) du trajet de transport (2) se chevauchent, le premier dispositif de support (11) et le second dispositif de support (12) s'étendent parallèlement l'un à l'autre.

3. Dispositif de chargement (1) selon la revendication 1 ou 2, dans lequel la troisième section (23) du trajet de transport (2) suit, en aval, la première section (21) du trajet de transport (2) et ne chevauche pas la première section (21).

4. Dispositif de chargement (1) selon l'une des revendications précédentes, dans lequel le dispositif de pivotement (13) est conçu en tant que dispositif passif, en particulier en tant que dispositif entraîné non activement, qui entre en contact avec la paroi avant (411) de la poche de transport (41) de l'unité de transport (4) lors du transport de l'unité de transport (4) dans la première section (21) du trajet de transport (2).

5. Dispositif de chargement (1) selon l'une des revendications précédentes, dans lequel le dispositif de pivotement (13) comprend une rampe, une butée, une barrière et/ou au moins un rouleau (131) horizontal disposé transversalement par rapport au trajet de transport.

6. Dispositif de chargement (1) selon l'une des revendications précédentes, dans lequel les deux points d'appui (413) sont disposés dans une zone inférieure de la paroi arrière (412) de la poche de transport (41).

7. Dispositif de chargement (1) selon l'une des revendications précédentes, dans lequel le premier dispositif de support (11) comprend deux rails de guidage (111) parallèles qui sont conçus de sorte que les deux points d'appui (413) saillant latéralement de la paroi arrière (412) reposent chacun, lors du transport de l'unité de transport (4) dans la deuxième section (22) du trajet de transport (2), sur l'un des deux rails de guidage (111).

8. Dispositif de chargement (1) selon la revendication 7, dans lequel les deux rails de guidage (111) comprennent chacun une délimitation latérale sur le côté opposé à la poche de transport (41), par exemple une tôle déflectrice.

9. Dispositif de chargement (1) selon l'une des revendications précédentes, dans lequel le second dispositif de support (12) comprend un dispositif à rouleaux (121) comprenant une pluralité de rouleaux (122) disposés transversalement par rapport au trajet de transport (2).

10. Dispositif de chargement (1) selon l'une des revendications précédentes, le dispositif de chargement (1) comprenant une unité de transfert (6) qui est configurée pour transporter un article (7) de marchandise à la pièce dans la poche de transport (41) lorsque la poche de transport (41) se trouve dans la troisième section (23) du trajet de transport (2).

11. Dispositif de chargement (1) selon l'une des revendications précédentes, dans lequel la paroi avant (411) et la paroi arrière (412) de la poche de transport (41) sont parallèles l'une à l'autre et sont reliées de manière pivotante par des éléments d'écartement (414), de sorte que la paroi avant (411), la paroi arrière (412) et les éléments d'écartement forment ensemble un parallélépipède.

12. Dispositif de déchargement (3) pour décharger des unités de transport chargées en articles (7) de marchandise à la pièce dans un dispositif convoyeur suspendu, comprenant :
un dispositif convoyeur suspendu (5) comprenant au moins une unité de transport (4) dotée d'un élément porteur (43) et d'une poche de transport (41) suspendue de manière pivotante à l'élément porteur (43), le dispositif convoyeur suspendu (5) étant conçu pour transporter l'au moins une unité de transport (4) le long d'un trajet de transport (2) dans une direction de transport (24), la poche de transport (41) de l'au moins une unité de transport (4) comprenant une paroi arrière (412) qui est montée de manière pivotante sur l'élément porteur (43) de l'unité de transport (4), et ladite paroi arrière (412) comprenant deux points d'appui (413) disposés en saillie latérale de part et d'autre de la paroi arrière (412), ainsi qu'une paroi avant (411) reliée de manière mobile à la paroi arrière (412), laquelle précède la paroi arrière (412) dans la direction de transport (24) ;
un dispositif de pivotement (33) configuré pour interagir avec la paroi avant (411) de la poche de transport (41) d'une unité de transport (4) transportée le long du trajet de transport (2) du dispositif convoyeur suspendu (5) afin de faire pivoter la poche de transport (41), pendant le transport le long d'une première section (27) du trajet de transport (2), d'une première orientation verticale vers une seconde orientation pivotée par rapport à la verticale ;
un premier dispositif de support (31) configuré pour supporter une poche de transport (41) pivotée dans la seconde orientation pendant le transport le long d'une deuxième section (28) du trajet de transport (2), au moyen des deux points d'appui (413) de la paroi arrière de la poche de transport (41) ;
dans lequel le dispositif convoyeur suspendu (5) et le premier dispositif de support (31) sont configurés de sorte que, dans une troisième section (29) du trajet de transport (2), la paroi arrière (412) de l'unité de transport (4) est pivotée suffisamment vers l'arrière dans la direction de transport (24) que la paroi arrière (412) présente une pente négative.

13. Dispositif de déchargement (3) selon la revendication 12, le dispositif de déchargement (3) comprenant une goulotte de déchargement (34) qui est configurée pour réceptionner des articles (7) de marchandise à la pièce, dans la troisième section du trajet de transport (2), à partir de la poche de transport (41) de l'unité de transport (4), de sorte que les articles (7) de marchandise à la pièce pris en charge peuvent glisser par gravité sur la goulotte de déchargement (34) vers une zone de destination (35).

14. Dispositif de déchargement (3) selon la revendication 12 ou 13, dans lequel le dispositif de pivotement (33) est conçu en tant que dispositif passif, en particulier en tant que dispositif entraîné non activement, qui entre en contact avec la paroi avant (411) de la poche de transport (41) de l'unité de transport (4) lors du transport de l'unité de transport dans la première section (27).

15. Dispositif de déchargement (3) selon l'une des revendications 12 à 14, dans lequel le dispositif de pivotement (33) comprend une rampe, une butée, un obstacle et/ou au moins un rouleau (331) horizontal disposé transversalement par rapport au trajet de transport (2).

16. Dispositif de déchargement (3) selon l'une des revendications 12 à 15, dans lequel les deux points d'appui (413) sont disposés dans une zone inférieure de la paroi arrière (412) de la poche de transport (41).

17. Dispositif de déchargement (3) selon l'une des revendications 12 à 16, dans lequel le premier dispositif de support (31) comprend deux rails de guidage (311) parallèles qui sont conçus de sorte que les deux points d'appui (413) saillant latéralement de la paroi arrière reposent chacun, lors du transport de l'unité de transport (4) dans la deuxième section (28), sur l'un des deux rails de guidage (311).

18. Dispositif de chargement (3) selon la revendication 17, dans lequel les deux rails de guidage (311) comprennent chacun une délimitation latérale sur le côté opposé à la poche de transport (41), par exemple une tôle déflectrice.

19. Dispositif de déchargement (3) selon l'une des revendications 12 à 18, dans lequel le premier dispositif de support (31) comprend un moyen de vibration (312).

20. Dispositif de déchargement (3) selon l'une des revendications 12 à 19, dans lequel la paroi avant (411) et la paroi arrière (412) de la poche de transport (41) sont parallèles l'une à l'autre et sont reliées de manière pivotante par des éléments d'écartement (414), de sorte que la paroi avant (411), la paroi arrière (412) et les éléments d'écartement (414) forment ensemble un parallélépipède.

21. Installation de convoyeur suspendu (9) comprenant au moins un dispositif de chargement (1) selon l'une des revendications 1 à 11 et/ou au moins un dispositif de déchargement (3) selon l'une des revendications 12 à 20.
